# EUROPEAN PATENT SPECIFICATION

(11) **EP 2 107 873 B1**
(45) Date of publication and mention of the grant of the patent: **03.08.2016**
(21) Application number: 07844474.2
(22) Date of filing: 19.10.2007
(51) Int. Cl.: A23G 3/54, A23G 3/20, A23G 3/34, A23G 4/04, A23G 4/20, A23G 1/54

(54) **APPARATUS AND METHOD OF MAKING CENTER-FILLED CONFECTIONERY PRODUCT**
VORRICHTUNG UND VERFAHREN ZUR HERSTELLUNG EINES GEFÜLLTEN SÜSSWARENPRODUKTS
APPAREIL ET PROCÉDÉ DE FABRICATION DE PRODUIT DE CONFISERIE FOURRÉ

(30) Priority: 20.10.2006 US 862380 P
(43) Date of publication of application: 14.10.2009
(73) Proprietor: Wm. Wrigley Jr. Company, Chicago, IL 60642 (US)
(72) Inventor: FORNAGUERA, Joan F., 08190 Sant Cugat Del Valles (ES); ABAD, Dennis, Woodbridge, IL 60517 (US); BORDERA, Luis, Sabadell (Barcelona) 08208 (ES); GIL, Andy, Eggbuckland, Plymouth, Devon PL6, (GB); BLAZQUEZ, Melchor, Badalona 08812, (ES); ROMERO, Emili, Saint Quirze del Valles, Barcelona 08192, (ES)
(74) Representative: Boult Wade Tennant
(86) International application number: PCT/US2007/081983
(87) International publication number: WO 2008/051861

(56) References cited:
- US-A- 2 705 462
- US-A- 4 229 484
- US-A- 5 342 188
- US-A- 5 397 580
- US-A1- 2005 100 633
- US-A1- 2006 193 909
- US-B1- 6 214 389

## Description

### BACKGROUND

The present disclosure relates generally to confectionery products and apparatuses and methods for making the same.

Center-filled confectionery products enjoy widespread consumer appeal. High-volume production systems for keeping pace with the high consumer demand for these products may include a coextruder and a forming device. A coextruder may operate to produce a filled rope of confectionery material. Further, a forming device may operate to feed the center-filled confectionery rope between opposing first and second forming members. The forming members cooperatively engage to crimp, seal, and form the rope into sealed center-filled confectionery pieces. The sealed center-filled confectionery pieces may be removed from the forming device with or without an ejection device.

For example, US 2005/0100633 describes a method and system for continuously producing pieces of liquid-filled gum material. An extruded rope of liquid-filed gum is sized and separated into individual pieces of gum. A rotating drum mechanism having a die ring and cutter ring with mating die members separate the rope of gum material into individual pieces. Pairs of cam-operated plunger members compress and form the pieces of gum material in the die cavities. Angled grooves in the die members prevent portions of the gum pieces from being chipped-off during formation. Guide pin members are positioned between rider members on the plunger members. A feed chute with air assist transfers the gum rope from a sizing table to the rotating drum mechanism. A stripper member insures that the formed pieces of gum material are removed from the drum mechanism. Portions of the drum mechanism can be selective heated and cooled, or not cooled at all.

### SUMMARY

The present disclosure sets forth apparatuses and methods for producing center-filled confectionery products.

According to a first aspect of the present invention there is provided an apparatus comprising the features of claim 1 for forming a confectionary product.

In one embodiment, a device for producing an elongated product having multiple segments is provided which includes a rotational apparatus that is so constructed and arranged to rotate in a first plane, and a plunger that is so constructed and arranged to push the product toward alignment with a second plane. The second plane forms an angle with the first plane that is greater than about 5° and less than about 90° from the first plane.

In one embodiment, the angle of the second plane with respect to the first plane is from about 10° to about 45°.

In one embodiment, the device includes multiple plungers. The multiple plungers are constructed and arranged to push the product different distances at one time during a revolution of the rotational apparatus.

In another embodiment, the apparatus further includes a plunger member that is so constructed and arranged to contact a first side of the product to push at least a portion of the product a first distance out of the at least one of the plurality of first forming members. The product is not contacted by a second plunger member located on an opposite side of the product.

In one embodiment, the first and second wheels rotate in a same plane.

In one embodiment, the apparatus further includes a plurality of plunger members. The plurality of plunger members are so constructed and arranged so as to traverse a cam profile once during a cycle and wherein each one of the plurality of plunger members traverses a same path during the cycle. In one embodiment, the plurality of plunger members traverse the cam profile sequentially such that each of the plurality of plunger members operates to push the product entirely out of the plane one time during the cycle.

In another embodiment, the apparatus further includes a plunger member that is so constructed and arranged as to push at least a first portion of the beaded rope out of the first forming members at more than one rotational location. A second portion of the beaded rope remains within the first forming members when a first portion of the beaded rope is pushed out of the first forming members.

In one embodiment, the first and second wheels rotate in a same plane.

In one embodiment, a plurality of plunger members are provided. The plurality of plunger members are so constructed and arranged so as to traverse a cam profile once during a cycle. Each one of the plurality of plunger members traverses a same path during the cycle. In one embodiment, the plurality of plunger members traverse the cam profile sequentially such that each of the plurality of plunger members operates to push the product entirely out of the plane one time during the cycle.

In yet another embodiment, the apparatus further includes a non-contact ejection device.

In one embodiment, the non-contact ejection device is a device for discharging a pressurized fluid that operates to eject a confectionery product adjacent at least one of the first and second forming members from the forming members.

In one embodiment, the non-contact ejection device is so constructed and arranged to remove the beaded rope from at least one of the first and second forming members without contacting the beaded rope.

In one embodiment, at least one of the first and second forming members has an opening for discharging a pressurized fluid.

In one embodiment, the first and second wheels rotate in a same plane.

In one embodiment, the non-contact ejection device ejects a confectionery product in a direction that is parallel to the plane in which the first and second wheels rotate.

In one embodiment, the non-contact ejection device ejects a confectionery product in a direction that is perpendicular to the plane in which the first and second wheels rotate.

In still yet another embodiment, the apparatus does not include an ejection device.

In one embodiment, the first and second wheels rotate to disengage the first and second forming members from each other. Upon disengagement of the first and second forming members, the beaded rope releases from the first forming member by the force of gravity.

In one embodiment, the first and second wheels rotate in a same plane.

In one embodiment, a guide directs the beaded rope out of the plane in which the first and second wheels rotate.

In one embodiment, the guide comprises a shape. The shape may be flat, semi-cylindrical, U-shaped, L-shaped, and combinations thereof.

According to a second aspect of the present invention there is provided a method for producing a confectionary product comprising the steps of claim 7.

In one embodiment the method includes causing the first forming members to mate with the second forming members to form a beaded rope where the beaded rope has a first side and an opposing side, and contacting the first side of the beaded rope with a plunger member to push a portion of the beaded rope a first distance out of the first forming members. The beaded rope is not contacted by a second plunger member on the opposing side.

In one embodiment, the method includes allowing the plunger member to traverse a cam profile in order to push the portion of the beaded rope the first distance out of the first forming members.

In one embodiment, the method includes separating the beaded rope into a plurality of confectionery pieces.

In one embodiment, the method includes coating the plurality of confectionery pieces with a coating material.

In one embodiment, the method includes delivering the beaded rope to a transport device.

In a further embodiment, the method includes forming a center-filled confectionery piece having sealed ends, pushing a portion of the center-filled confectionery piece a first distance out of the first forming member at a first rotational location using a plunger member, and pushing the portion of the center-filled confectionery piece a second distance out of the first forming member at a second rotational location using the plunger member. In one embodiment, the second distance is greater than the first distance.

In one embodiment, the method includes disengaging the first forming member from the second forming member and maintaining the confectionery piece in the first forming member.

In one embodiment, the method includes allowing the plunger member to traverse a cam profile in order to push the portion of the center-filled confectionery piece the first and second distances out of the first forming member.

In one embodiment, the method includes coating the confectionery piece with a coating material.

In yet another embodiment, the method includes removing the sealed center-filled confectionery product from at least the first forming member with a non-contact ejection device.

In one embodiment, the sealed center-filled confectionery product is selected from the group consisting of a beaded rope with a plurality of center-filled confectionery pieces attached to each other, an individual center-filled confectionery piece, and combinations thereof.

In one embodiment, the method includes disengaging the first forming member from the second forming member and maintaining the center-filled confectionery product in the first forming member.

In one embodiment, the non-contact ejection device is a device for discharging a pressurized fluid.

In one embodiment, the method includes discharging a pressurized fluid at a location selected from the group consisting of across the at least one of the first and second forming members, through the at least one of the first and second forming members, into the at least one of the first and second forming members, from the at least one of the first and second forming members, and combinations thereof.

In one embodiment, the method includes coating the sealed center-filled confectionery product with a coating material.

In still yet another embodiment, the method includes removing the beaded rope from at least one of the first and second forming members without an ejection device.

In one embodiment, the method includes separating the beaded rope into a plurality of center-filled confectionery pieces.

In one embodiment, the method includes coating the plurality of center-filled confectionery pieces with a coating material.

In one embodiment, the method includes disengaging the first and second forming members from each other and allowing the beaded rope to release from the second forming members before releasing from the first forming members.

In one embodiment, the method includes disengaging the first and second forming members from each other and allowing the beaded rope to release from the first forming members by the force of gravity.

In one embodiment, the method includes guiding the beaded rope out of one of the first and second forming members using a guide.

There is also described, an apparatus which includes an extruder having a housing having an inlet for receiving a material, at least one extrusion screw within an interior of the housing, and at least one device in cooperative communication with the inlet and the extrusion screw. The device is so constructed and arranged as to move a material introduced into the inlet into contact with the extrusion screw.

In one example, the at least one device includes a rotatable cross-blade. The rotatable cross-blade includes an axle having first and second fin portions extending therefrom.

In one example, the first fin portion extends from the axle at an angle of about 90° from the second fin portion.

In one example, the fin portions are substantially solid.

In one example, the fin portions comprise beveled ends.

In one example, the fin portions comprise perforations.

In one example, each fin portion covers from about 40% to about 60% of a length of the axle.

In one example, the first and second fin portions overlap along a portion of the axle.

In one example, the rotatable cross-blade is located between the inlet and the extrusion screw.

In one example, an axle of the rotatable cross-blade is oriented in a direction that is substantially transverse to a length of the extrusion screw.

In one example, the rotatable cross-blade is located alongside the extrusion screw.

In one example, an axle of the rotatable cross-blade is oriented in a direction that is substantially parallel to a length of the extrusion screw.

In one example, the rotatable cross-blade rotates at a speed from about 2 rpm to about 5 rpm.

In one example, a gap is present between the cross-blade and the extrusion screw, the gap having a length from about 0.5 millimeters to about 2.0 millimeters.

In one example, the apparatus includes two rotatable cross-blades.

In one example, the rotatable cross-blades rotate in opposite directions.

In one example, the rotatable cross-blade is programmed to rotate in one of a continuous and intermittent manner.

In one example, the housing comprises first and second extrusion screws.

There is also described, a system for producing a center-filled chewing gum product. The system includes an extruder, a coextruder for coextruding a rope of a center-filled chewing gum product, and a forming device.

In one example, the extruder is upstream from the coextruder.

In one example, the system includes a mixing device upstream from the extruder. The mixing device is selected from the group consisting of a batch mixer, a mixing extruder, and combinations thereof.

There is also described, a further system for producing a center-filled chewing gum product. The system includes an extruder, a relaxation belt, a coextruder for coextruding a rope of a center-filled chewing gum product, and a forming device. In one example, the extruder is upstream from the coextruder.

In one example, the relaxation belt is upstream from the coextruder and downstream from the extruder.

In one example, the relaxation belt has a length that is sufficient to allow the extrudate to equilibrate before entering the coextruder.

In one example, the system includes a mixing device upstream from the extruder. The mixing device is selected from the group consisting of a batch mixer, a mixing extruder, and combinations thereof.

In one example, the system includes a sizing device.

In one example, the system includes a cooling chamber.

In one example, the system includes a coating device.

There is also described yet a further system for producing a center-filled chewing gum product. The system includes an extruder having at least one device in cooperative communication with an inlet and an extrusion screw, a coextruder, and a forming device.

In one example, the extruder is upstream from the coextruder.

In one example, the at least one device is a rotatable cross-blade.
In one example, the rotatable cross-blade is so constructed and arranged as to move a material introduced into the inlet into contact with the extrusion screw.

In one example, the rotatable cross-blade includes an axle having first and second fin portions extending therefrom.

In one example, the first fin portion extends from the axle at an angle of about 90° from the second fin portion.

In one example, the first and second fin portions overlap along a portion of the axle.

There is also described yet a further system for producing a center-filled chewing gum product. The system includes an extruder having at least one device in cooperative communication with an inlet and an extrusion screw, a relaxation belt, a coextruder, and a forming device.

In one example, the extruder is upstream from the coextruder.

In one example, the relaxation belt is upstream from the coextruder and downstream from the extruder.

In one example, the device is a rotatable cross-blade. The rotatable cross-blade is so constructed and arranged as to move a material introduced into the inlet into contact with the extrusion screw.

In one example, the rotatable cross-blade includes an axle having first and second fin portions extending therefrom.

In one example, the first fin portion extends from the axle at an angle of about 90° from the second fin portion.

In one example, the first and second fin portions overlap along a portion of the axle.

There is also described a method for producing a center-filled chewing gum composition. The method includes introducing a mass of chewing gum into an extruder, extruding the mass to form an extrudate, feeding the extrudate and a center-fill composition into a coextruder to form a rope of a center- filled chewing gum, and forming individual pieces of center-filled chewing gum in a forming device.

In one example, the method includes mixing chewing gum materials in a mixing device to make the mass of chewing gum.

In one example, the method includes allowing the extrudate to equilibrate on a relaxation belt upon exiting the extruder.

In one example, the method includes sizing the rope of center-filled chewing gum in a sizing device after coextruding the rope.
In one example, the method includes cooling the pieces of center-filled chewing gum in a cooling chamber.

In one example, the pieces of chewing gum comprise a beaded rope of sealed center-filled chewing gum pieces attached to each other.
In one example, the method includes separating the center-filled chewing gum pieces and coating the pieces with a coating material.

There is also described a further method for producing a center-filled chewing gum composition. The method includes introducing a mass of chewing gum into an extruder, moving, with at least one cross-blade, the chewing gum mass introduced into the extruder into contact with an extrusion screw, extruding the mass to form an extrudate, feeding the extrudate and a center-fill composition into a coextruder to form a rope of a center-filled chewing gum, and forming center-filled chewing gum pieces in a forming device.

In one example, the method includes mixing chewing gum ingredients in a mixing device to make the mass of chewing gum.

In one example, the mixing device is a batch mixer.

In one example, the mixing device is a mixing extruder.

In one example, the method includes allowing the extrudate to equilibrate on a relaxation belt upon exiting the extruder.

In one example, the method includes sizing the rope of center-filled chewing gum in a sizing device after coextruding the rope.

In one example, the method includes cooling the center-filled chewing gum pieces in a cooling chamber.

In one example, the center-filled chewing gum pieces form a beaded rope of sealed center-filled confectionery pieces attached to each other.

In one example, the method includes separating the center-filled chewing gum pieces and coating the pieces with a coating material.

There is also described yet a further method for producing a center-filled chewing gum composition. The method includes introducing chewing gum ingredients into a mixing extruder, mixing the chewing gum ingredients in the mixing extruder, extruding a chewing gum extrudate, feeding the extrudate and a center-fill composition into a coextruder to form a rope of a center-filled chewing gum, feeding the rope of center-filled chewing gum into a forming device; and forming individual pieces of center-filled chewing gum in the forming device.

In one example, the chewing gum ingredients are selected from the group consisting of base, bulking agents, flavor, softeners, and combinations thereof.

In one example, the extrudate is extruded onto a relaxation belt prior to delivering the extrudate to a coextruder.

In one example, the relaxation belt has a length that is sufficient to allow the extrudate to equilibrate before entering the coextruder.

In one example, the method includes allowing the extrudate to equilibrate on a relaxation belt after exiting the mixing extruder.

In one example, the method includes sizing the rope of center- filled chewing gum in a sizing device after coextruding the rope.

In one example, the forming device forms the rope of center-filled chewing gum into a beaded rope including a plurality of sealed center-filled confectionery pieces attached to each other.

In one example, the method includes separating the center- filled confectionery pieces and coating the pieces with a coating material.

There is also described a confectionery product. The confectionery product may include a fluid center and an outer portion. The product has a width ratio from about 65% to about 85%. The product may include an end. A plane may substantially bisect the confectionery product. A tapered portion may extend between the end and an upper surface of the product. The tapered portion may form an angle from about 30° to about 60° with the plane. The product may be coated with a coating material.

In one example, the tapered portion may be flat or planar or substantially planar.

In one example, the confectionery product may include opposing ends and a first side and an opposing second side. The sides and the ends may form a product perimeter. Each side may have an inwardly curved portion to provide the perimeter having an hour-glass shape.

In one example, the fluid center may be a liquid, a semi-liquid, a paste, a semi-solid, a fiowable solid, and combinations thereof. In one example, the fluid center may be from about 10% to about 15% by weight of the product. The outer portion may be a confectionery such as chewing gum, chewy confectionery, and combinations thereof.

In one example, the confectionery product may include a coating. The coating may be from about 25% to about 35% by weight of the confectionery product. The confectionery product may have a weight from about 1.8 grams to about 2.4 grams.

There is also described a further confectionery product. The confectionery product includes a first piece and a second piece. Each piece has a center-fill portion and an outer portion with opposing sealed ends. A land extends between a sealed end of the first piece and a sealed end of the second piece. The land thereby attaches the first piece to the second piece. The land may be an extension of the outer portion. In one example, the land may be composed of the same material as the outer portion, the land containing no center-fill material. In a further example, the land is a confectionery material such as chewing gum, chewy confectionery, and combinations thereof.

In one example, a plane extends through the opposing sealed ends of at least one of the pieces. The piece may be asymmetrical along the plane.

In one example, the land has a thickness from about 0.05 mm to about 0.25 mm.

In one example, the land is an extension of the outer portion.

In one example, at least one of the pieces has a width ratio from about 65% to about 85%.

In one example, a plane extends through the land, the plane being substantially normal to the land. With this plane as a reference, the first piece is symmetrical to the second piece.

There is also described yet a further confectionery product. The confectionery product includes a first portion and a second portion, each portion defining a separate interior. The first and second portions may each have a separate center-filled portion in the interior.

In one example, a land may extend between an end of the first portion and an end of the second portion.

There is also described yet a further confectionery product. The confectionery product includes a body having an inner center- fill portion and an outer portion with opposing sealed ends. The body may be asymmetrical along a plane extending between the sealed ends. The confectionery product may include a tapered portion extending between an end of the outer portion and an upper surface of the outer portion.

In one example, the confectionery product may have at least one side with a substantially hour-glass shape.

In one example, the center-fill portion made be a liquid, a semi-liquid, a paste, a gel, a semi-solid, a flowable solid, and combinations thereof.

In one example, the outer portion may be chewing gum, chewy confectionery, and combinations thereof.

There is also described yet a further confectionery product. The confectionery product may include a body having a center-fill portion and an outer portion and opposing sealed ends. The body may be asymmetrical along a plane extending between the sealed ends. The confectionery product may further include a coating on the body forming a coated confectionery product symmetrical along the plane.

Advantages of embodiments of the present disclosure will now be set forth. It should be noted that not all of these advantages may be met by any specific embodiment of the present disclosure.

It is an advantage of the present disclosure to provide an improved apparatus for making chewing gum.

It is an advantage of the present disclosure to provide an improved method for making chewing gum.

It is an advantage of the present disclosure to provide an improved chewing gum.

It is an advantage of the present disclosure to provide a manufacturing process for center- filled confectioneries that reduces the risk of the confectionery product sticking or otherwise adhering to the production equipment. For example, the beaded rope disclosed herein exits the forming device as a unitary piece. This promotes ready separation of the individual crimped segments of the beaded rope from the forming members.

It is an advantage of the present disclosure to provide a manufacturing and production process for center-filled confectioneries that moves the fluid fill material away from the sealing areas immediately prior to crimping and sealing opposing confectionery portions of the fluid-filled confectionery rope to form the sealed ends.

It is an advantage of the present disclosure to provide a fluid-filled confectionery product having one or more tapered portions. The tapered portions can provide sealed ends having improved strength and sealed ends resistant to leakage. The tapered portions and/or the inwardly curved portions can provide the confectionery product with a form and shape that is durable and resistant to production stresses, and resilient to handling, the product form promoting even and uniform coating of the fluid-filled confectionery product.

It is an advantage of the present disclosure to provide a fluid-filled confectionery product having one or more tapered portions yielding a fluid-filled confectionery product with an aesthetically pleasing appearance that is attractive to consumers. The tapered portions are preferably resistant to leakage, which improves product longevity and extends product shelf life.

It is an advantage of the present disclosure to provide an apparatus for producing a center-filled confectionery product that uses plunger members to remove the confectionery product from the apparatus.

It is an advantage of the present disclosure to provide an apparatus for producing a center-filled confectionery product that uses a device that does not touch the center-filled confectionery product to remove the product from the apparatus. Such a non-contact device serves to reduce the possibility that the ejection device will damage the product.

It is an advantage of the present disclosure to provide an apparatus for producing a center-filled confectionery product that pushes a formed product out of the way of an incoming unformed product in order to avoid collision of the two forms of the product during the forming process.

It is an advantage of the present disclosure to provide an apparatus that seals and forms a center-filled confectionery rope without the use an ejection device such as a plunger device or a similar device.

It is an advantage of the present disclosure to provide an apparatus for producing a center-filled confectionery product that does not require a plunger member to remove the confectionery product from the apparatus.

It is an advantage of the present disclosure to provide an apparatus for forming center-filled confectionery products that requires less equipment and experiences less equipment downtime when compared to conventional forming devices which use ejection devices.

It is an advantage of the present disclosure to provide a center-filled confectionery product having an asymmetrical center-filled body that may be coated to form a symmetrical coated center-filled confectionery product that is aesthetically appealing to consumers.

It is an advantage of the present disclosure to provide an apparatus that forms center-filled confectionery products and permits real-time visual inspection and monitoring of the crimping, sealing, and forming process which occurs within the forming device.

Another advantage of the present disclosure is to provide an apparatus that allows for a consistent composition of a chewing gum material.

A further advantage of the present disclosure is to provide an apparatus having a cross-blade to rapidly move a large mass of material through the extruder.

An additional advantage of the present disclosure is to provide systems for making a center-filled chewing gum product.

An additional advantage of the present disclosure is to provide enhanced stability throughout a confectionery material composition to avoid breakage of the composition during manufacturing of a final confectionery product.

Additional features and advantages are described herein, and will be apparent from, the following Detailed Description and the Figures.

### BRIEF DESCRIPTION OF THE FIGURES

Figure 1 is a schematic view of an apparatus for the production of a center- filled confectionery product.
Figure 2 is a perspective view of a coextrusion device and a sizing device.
Figure 3 is a side elevation view of a forming device.
Figure 4 is an enlarged elevation view of area 4 of Figure 3.
Figure 5 is a schematic representation of a forming device.
Figure 6 is a perspective view of a first wheel and a second wheel.
Figure 7 is a side elevation view of a forming device.
Figure 8 is an enlarged elevation view of area 11 of Figure 10.
Figure 9 is an enlarged elevation view of area 11.
Figure 10 is a perspective view of a forming device and a beaded rope.
Figure 11 is a fragmentary perspective view of a forming device.
Figure 12 fragmentary perspective view of a forming device.
Figure 13 A is an enlarged elevation view of an embodiment of area 13 A of Figure 10.
Figure 13B is a sectional view taken along line 13B-13B of Figure 13 A.
Figure 14 is a perspective view of a center-filled confectionery product.
Figure 15 is an elevation view of the center-filled confectionery product of Figure 14.
Figure 16 is a sectional view taken along line 16-16 of Figure 14.
Figure 17 is a perspective view of a center-filled confectionery product.
Figure 18 is a perspective view of a center-filled confectionery product.
Figure 19 is a sectional view taken along line 19-19 of Figure 18.
Figure 20 is a perspective view of a coated center-filled confectionery product.
Figure 21 is a sectional view taken along line 21-21 of Figure 20.
Figure 22 is a plan view of a coated confectionery product.
Figure 23 is a side schematic representation of an apparatus for the production of a confectionery product.
Figure 24 is a side schematic representation of an apparatus.
Figure 25 is a plan schematic representation of an apparatus.
Figure 26 is a perspective view of a cross-blade.
Figure 27 is a sectional view taken along line 27-27 of Figure 26.
Figure 28 is a perspective view of a cross-blade.
Figure 29 is a perspective view of a cross-blade.
Figure 30 is an elevated schematic representation of an extrusion apparatus.
Figure 31 is a plan schematic representation of an extrusion apparatus
Figure 32 is a front schematic representation of an extrusion apparatus.
Figure 33 is a fragmentary perspective view of an extrusion apparatus.

### DETAILED DESCRIPTION

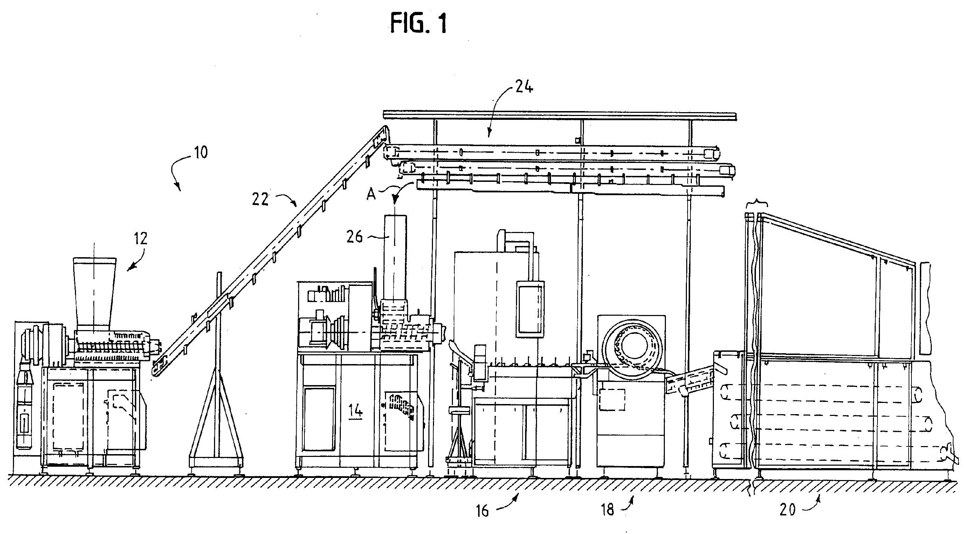

Referring to the Figures generally, and in particular to Figure 1, an apparatus 10 for producing center- filled confectionery is shown. Apparatus 10 includes a pre-extruder 12, a coextrusion device 14, a sizing device 16, and a forming device 18, and a cooling chamber 20, each of which will be discussed in detail.

The pre-extruder 12 receives confectionery material from a source of confectionery material (not shown) such as a mixer, feeder belt, or hopper, for example. The confectionery material may be any hard candy, soft candy, chewing gum, or other confectionery substance, or compound that has a fluid phase or may take a fluid form. In other words, the confectionery material may be heated or melted, form a syrup, or be dissolved in a liquid to obtain a plastic consistency as is commonly known in the art. The moisture content (and concomitant viscosity) of the confectionery material may vary greatly. The moisture content of the plastic phase of the confectionery substrate may typically be in the range of about 0.5% to about 20% by weight of the confectionery material. The plastic confectionery material may be subsequently cooled or solidified at room temperature to form a solid or semi-solid confectionery. Nonlimiting examples of suitable confectionery materials that are plastic or may be placed into a plastic state include pastes, gels, syrups, liquids or solids for making hard candies, soft candies, lollipops, fondants, toffees, jellies, chewing gums, chocolates, gelatins and nougats. The fluid confectionery material may include sugar or may be sugar-free. Coloring may be added to the confectionery material as desired. The confectionery material may also include a pharmaceutical product or a medicament. In one example, the confectionery material may be a chewing gum. Although the present disclosure is directed to confectionery materials, apparatus 10 may be used to form other extrudable center- filled items such as other extrudable foods (i.e., starches, pastas) as well as center-filled polymeric materials and products.

The pre-extruder 12 extrudes a continuous confectionery extrudate onto a conveyor 22 for delivery to the coextrusion device 14. The confectionery extrudate may have any shape or geometric form as desired including such nonlimiting examples as a rope, a sheet, a slab, or a strand with any desired thickness as is commonly known in the art. In one example, the confectionery extrudate may have a width of about 250 mm and a thickness of about 10 mm. Providing a pre-extruder 12 ensures that the confectionery extrudate extruded from the pre-extruder 12 is thoroughly uniform in density and shape for consistent feeding into the coextruder 14. For example, if the confectionery extrudate is a chewing gum mass, providing a thoroughly uniform chewing gum mass may reduce the risk of voids or imperfections in the mass, which may, in turn, reduce the risk of defects in, for example, a rope of center-filled chewing gum. Even the slightest defect in the integrity of an outer chewing gum portion of the rope may be enough to cause the center-fill composition to leak out of the outer chewing gum portion. If the leakage should occur during a coating operation, an entire batch of coated, center-filled chewing gum could be ruined. Therefore, it is beneficial to provide uniform consistency and shape of the confectionery material prior to coextrusion.

In one example, the conveyor 22 may receive the confectionery extrudate from the pre-extruder 12 and deliver the confectionery extrudate to one or more relaxation belts 24. Transport of the confectionery extrudate along the relaxation belt 24 permits the confectionery extrudate to cool and rebound from the pre-extrusion process. The relaxation belt 24 may be of a sufficient length, or may run at a sufficient speed, so as to allow the confectionery extrudate to relax and equilibrate before entering the coextrusion device 14. As used herein, "equilibrate" means that the any internal stresses and/or temperature variations imparted to the confectionery extrudate from the pre-extruder 12 are relaxed such that the internal stresses and/or temperature variations are neutralized, or allowed to come to equilibrium prior to coextrusion. The relaxation belt 24 may include one, long belt that travels at a slower speed to allow the confectionery extrudate sufficient time to relax after extrusion. Similarly, the relaxation belt 24 may also include several relaxation belts that are arranged in series as shown in Figure 1. In this example, a first relaxation belt may deliver the confectionery extrudate to a second relaxation belt, which may deliver the confectionery extrudate to a third relaxation belt and so forth. Relaxation of the confectionery extrudate provides a confectionery extrudate that is more consistent, stable, and has the lowest stress possible prior to coextrusion. In other examples, the pre-extruder 12 and/or relaxation belt 24 may include additional features, as will be discussed further herein below.

In one example, the confectionery extrudate may enter an inlet 26 of the coextrusion device 14 as indicated by arrow A of Figure 1. The relaxation belt 24 preferably delivers to the inlet 26 the confectionery extrudate which is consistent in temperature and elasticity throughout the entire length and width of the confectionery extrudate. A consistent and uniform confectionery extrudate will yield a more consistent product at all production stages downstream of the relaxation belt 24. The coextrusion device 14 may include an inner passageway (not shown) coaxially disposed within an outer passageway (not shown). The inner passageway may receive and coextrude a material having a plastic-like consistency along with the extrusion of the confectionery material from the outer passageway as is commonly known in the art.

In one example, the inner passageway may be in communication with a source of a flowable or fluid center-fill material as is commonly known in the art. The center-fill material or fluid-fill material may be a liquid, a semi-liquid, a paste, a gel, a semi-solid, a flowable solid, and combinations thereof. A nonlimiting example of a fluid solid may be a flowable solid material such as a granular or powder material. Similar to the confectionery extrudate, the fluid material may be any hard candy, soft candy, chewing gum, or other confectionery substance, or compound that has a fluid phase, may take a fluid form, or may be flowable. Indeed, the confectionery material and the fluid material may be the same or different material. The fluid material may be heated, melted, dissolved, form a syrup, or become flowable or fluid as is commonly known in the art. Consequently, the fluid material may be a liquid, a syrup, a gel, a paste, or a flowable solid such as a granular solid or a confectionery in powder form at ambient conditions. In one example, the fluid material may be a liquid with a viscosity that may be adjusted as desired. The fluid may be further sweetened, flavored, and/or colored as desired.

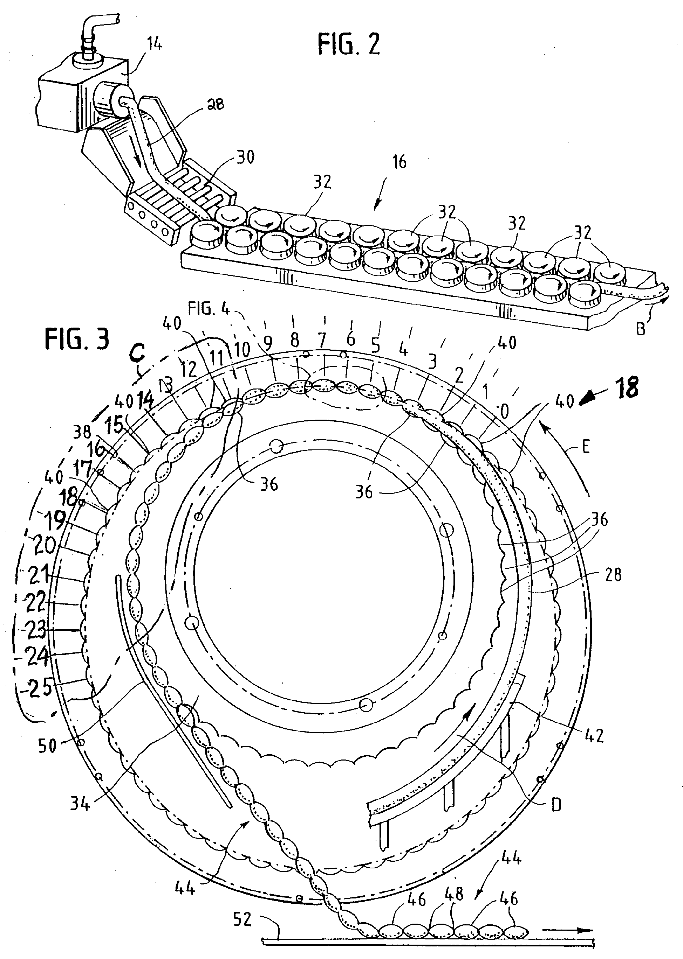

In one example, the coextrusion device 14 may coextrude a rope 28 of a center-filled confectionery as shown in Figure 2. A transport device 30 may deliver the rope 28 to the sizing device 16. The sizing device 16 may include a plurality of roller pairs 32 to size or otherwise reduce the diameter of the rope as is commonly known in the art. The rollers 32 may move the rope 28 through the sizing device 16 in the direction as indicated by arrow B.

The sizing device 16 delivers the rope 28 to the forming device as shown in Figure 3. The forming device 18 includes a first wheel 34 having one or more first forming members 36. The first forming members 36 may be located on an outer surface of the first wheel 34. In one example, the forming members 36 may be spaced along an outer circumferential surface (or an outer peripheral surface) of the first wheel 34.

The forming device 18 also includes a second wheel 38 having one or more second forming members 40. The second forming members 40 may be located on an inner surface of the second wheel 38. In one example, the second forming members 40 may be spaced along an inner circumferential surface (or an inner peripheral surface) of the second wheel 38. As can be seen in Figure 3, the first wheel 34 and the second wheel 38 are rotatable, yet the two wheels do not share a common axis of rotation. The first and second wheels 34, 38 are arranged and/or configured so that upon rotation of the first and second wheels 34, 38, the first forming members 36 and the second forming members 40 come into gradual registration with each other or otherwise come into mated engagement with each other. In other words, the first forming members 36 come into cooperative engagement (either continuously or intermittently as desired) with the second forming members 40 at substantially the top of the forming device 18 as shown in Figure 3. This is accomplished by having the axis of the first wheel 34 laterally offset from that of the second wheel 38 while both axes remain located in, and oriented perpendicular to, the common plane of rotation for the two wheels.

In one embodiment, the area of cooperative engagement of the first and second wheels 36, 38 may include a plurality of zones of registration, or zones of cooperative engagement, between the first and second wheels 34, 38 as shown by enumerated zones 0-13 in Figure 3. However, it is to be understood that the total number of forming members on each wheel would not necessarily be equal and that the corresponding relationship of the first and second forming members 36, 40 in this case would change with each rotation of the first wheel 34. In other words, a particular first forming member 36 would mate with different second forming members 40 with each revolution of the first wheel 34. Each wheel may be rotated by a suitable drive mechanism in the direction as indicated by arrow E (in Figure 3), as is commonly known in the art. In the case where each wheel has a different number of forming members, parity of linear velocities of the two sets of forming members is achieved by rotating the second (outer) wheel 38 at a higher rotational speed (i.e., revolutions per minute) compared with the first (inner) wheel 34.

A guide 42 supports, directs, or otherwise continuously feeds the rope 28 of fluid filled confectionery in the direction of arrow D and between the forming members 36, 40 of the first wheel 34 and the second wheel 38, respectively. With continued rotation of the first and second wheels 34, 38, the first forming members 36 and the second forming members 40 gradually approach each other while simultaneously coming into contact with the rope 28. With continued rotation, the first forming members 36 and the second forming members 40 pinch the rope 28 as shown in zones 0-3, for example. As the first and second wheels 34, 38 continue to rotate, the first forming members 36 and the second forming members 40 crimp the rope 28 as shown in zones 4-5. With continued rotation of the first and second wheels 34, 38, the first forming members 36 and the second forming members 40 come into full cooperative engagement with each other as shown in zones 5-9, for example. In full engagement, the first and second forming members 36, 40 are in the closest proximity with respect to each other. The crimping pressure imposed upon the rope 28 when the first and second forming members 36, 40 are in full cooperative engagement seals the confectionery material on the opposing sides of the rope to each other. With continued rotation of the first and second
wheels 34, 38, the distance between the first and the second forming members 36, 40 gradually increases, thereby enabling beaded rope 44 to separate from and exit forming device 18 as shown in zones 9-25. It is understood that the zones 0-13 are for illustration purposes and that the pinching, crimping, and sealing forces imposed upon the rope 28 by the first and second forming members 36, 40 may occur at one, some, or all of zones 0-13.

The crimping portions of the first and second forming members 36, 40 do not meet and are, in fact, separated by a gap even at their point of closest engagement. Thus, the crimped pieces will not normally separate but rather form a beaded rope 44 as will be discussed below.

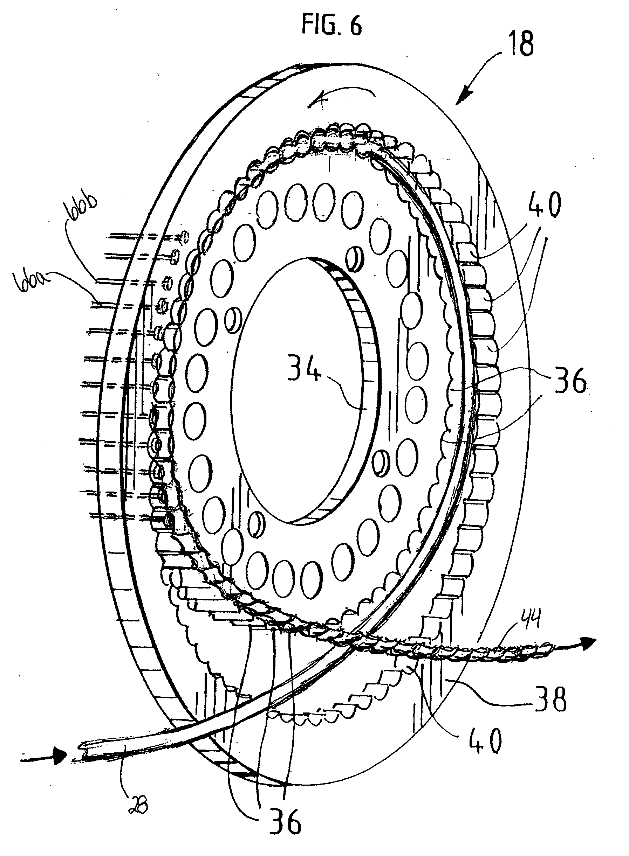

Upon disengagement of the first and second forming members 36, 40, the pinching, crimping, sealing, upon rope 28 in zones 0-13 forms the rope 28 into a beaded rope 44. The beaded rope 44 includes a plurality of sealed and fluid-filled confectionery pieces 46 attached to one another at crimp segments 48. Each crimp segment 48 creates a land which adjoins or otherwise connects adjacent fluid-filled confectionery pieces to each other. A guide 50 may be used to support and direct beaded rope 44 onto a transport device 52 as shown in Figure 3. To remove the beaded rope 44 from a plane in which the first and second wheels 34, 38 rotate, the guide 50 may be used to direct the beaded rope 44 out of the plane. In this way, a portion of the top of the guide 50 extends from the plane at an angle away from the plane such that the beaded rope 44 may contact the top of guide 50 when the beaded rope 44 is in the plane, and may be guided out of the plane by the guide 50 in a direction similar to, for example, the direction of the beaded rope 44 as shown in Figure 6. The guide 50 may have any shape known in the art and may be flat, semi-cylindrical, U-shaped, L-shaped, or any combination thereof. The transport device 52 (such as a conveyor) may transport or otherwise deliver the beaded rope 44 to the cooling chamber 20. A second transport device 54 may receive the beaded rope 44 and transport the beaded rope 44 in a different direction.

The formation of the beaded rope 44 is advantageous as the interconnection between the individual fluid-filled confectionery pieces 46 promotes and eases the separation and removal of each confectionery piece 46 from the first forming members 36 and/or the second forming members 40. The continuous separation motion of the beaded rope 44 and the weight of the beaded rope 44 portion that is already fully separated from the first forming members 36 provides an additional pulling or dropping force (due to gravity) upon individual confectionery pieces 46 still remaining in contact with the first forming members 36. This additional pulling force substantially reduces - and may wholly eliminate - the risk of the individual confectionery pieces 46 from breaking off from the beaded rope 44 and remaining or otherwise sticking to the first forming members 36. This pulling/separation force provided by the beaded rope 44 is a force absent in conventional forming devices which form wholly discrete, individual pieces within the forming members. Further, the formation of the beaded rope 44 also contributes to a "controlled fall" of the beaded rope 44 that aids in reducing the risk of the individual confectionery pieces 46 from being damaged in the process of exiting the forming device 18.

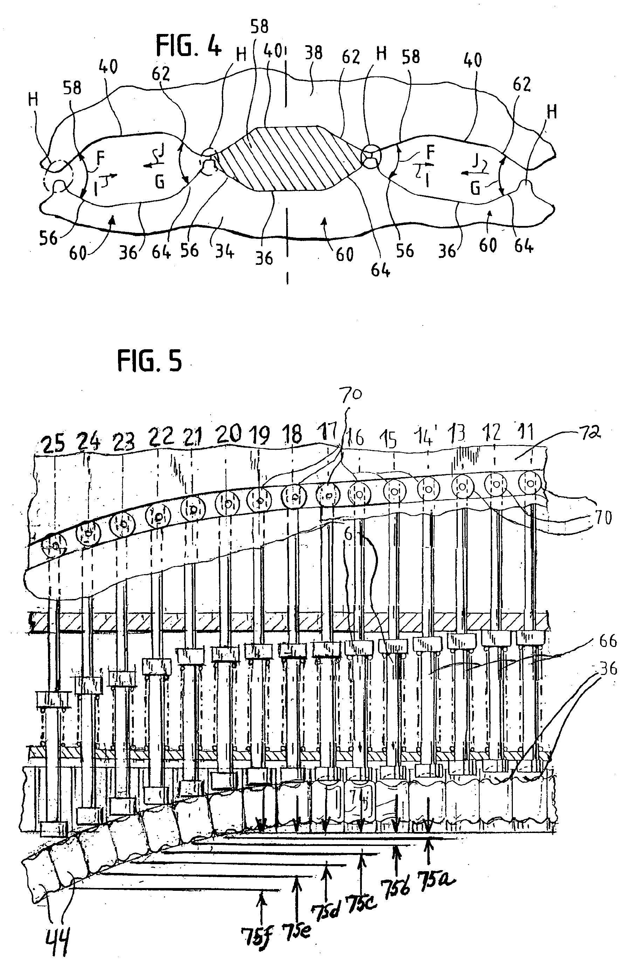

In one embodiment, each first forming member 36 may have a first tapered surface portion 56 as shown in Figure 4. Similarly, each second forming member 40 may have a second tapered surface portion 58. Figure 4 is an enlarged view of area 4 of Figure 3. Thus, Figure 4 shows zones 6, 7, and 8. The dark region within the mated forming member 60 in zone 7 exemplifies rope 28. In one embodiment, one or both tapered surface portions 56, 58 may be planar, or otherwise substantially flat or flat. Full cooperative engagement of the first and second forming members 36, 40 forms or otherwise provides a mated forming member 60. In one embodiment, the cooperative engagement that occurs in zones 6, 7, and 8 may provide mated forming members 60 in one, some, or each of zones 6, 7, and 8. It is understood that mated forming members may occur in other zones as well.

The first and second tapered surface portions 56 and 58 of the mated forming member 60 may form an angle F. In one embodiment, angle F may have a size or a magnitude from about 60° to about 120°, or from about 66° to about 110°, or from about 70° to about 90°, or from about 75° to about 85°, or any magnitude or size therebetween.

In a further embodiment, each first forming member 36 may have a third tapered surface portion 64 and each second forming member 40 may have a fourth tapered surface portion 62. In one embodiment, one or both tapered surface portions 62, 64 may be planar or otherwise substantially flat or flat. Third and fourth tapered surface portions 64 and 62 may form an angle G. In one embodiment, angle G may have a size or magnitude from about 60° to about 120°, or about 66° to about 110°, or from about 70° to about 90°, or from about 75° to about 85°, or any size therebetween. In a further embodiment, angle F and angle G may have the same size or magnitude.

The tapered surface portions 56, 58, 62, 64 advantageously promote the sealing of individual confectionery pieces 46. As first forming members 36 cooperatively engage and approach second forming members 40, first and second tapered surface portions 56 and 58 squeeze or otherwise push the fluid within the rope 28 away from crimping and sealing area H. In other words the shape of the tapered surface portions 56, 58 moves the fluid toward the center of the forming individual confectionery piece 46 as shown by arrow I. Similarly, third and fourth tapered surface portions 62, 64 move the fluid in the rope 28 away from sealing area H and toward the center of forming individual confectionery piece 46 as shown by arrow J. Thus, the tapered surface portions 56, 58, 62, and 64 move the fill fluid away from the sealing area (and into the center of the confectionery piece) thereby providing more direct contact between opposing surfaces of the confectionery material. By removing the fill fluid from the sealing area, the tapered surface portions 56, 58, 62, and 64 increase the available surface area for direct confectionery-to-confectionery contact between opposing sides of the rope 28, thereby promoting a stronger, longer lasting, more durable confectionery seal.

In one embodiment, the first wheel 34 may include plunger members 66, wherein each plunger member 66 may correspond to each first forming member 36. Figure 5 is a plan view of area C of Figure 3, with the second wheel 38 removed to clearly illustrate the operation of the plunger members 66 within the first forming members 36. Zones 11-25 of Figure 5 correspond to zones 11-25 of Figure 3. Each of zones 11-25 may include a plunger member 66. The plunger members 66 may be biased (i.e., by way of a spring or a similar device) to default to a retracted position, such as, for example, the position of the plunger member 66 in zone 11.

A cam 72 having a cam profile may move the plunger members 66 into and out of the respective first forming members 36, as is commonly known in the art. In one embodiment, the plunger members 66 include rollers 70 that may traverse the cam profile when the rollers 70 contact the cam 72 during a revolution of the first wheel 34. As used herein, "cam profile" will be understood to mean the shape of the outer surface of the cam 72 upon which the rollers 70 traverse. In one embodiment, and as shown in Figure 5, the cam 72 may gradually increase in thickness from a top of the cam 72 (i.e., corresponding to a location near zone 11) to a bottom of the cam 72 (i.e., corresponding to a location near zone 25). As the cam 72 gradually increases in thickness, the rollers 70 may traverse the cam profile such that the plunger members 66 are gradually pushed further into the first forming members 36 to contact the beaded rope 44 of confectionery material to gradually push the beaded rope 44 out of the first forming members 36, as is shown by Figure 5. In one embodiment, the cam 72 may be fixed at a location on the side of the forming device 18 having the plunger members 66. The cam 72 may also be fixed at a location that corresponds to from about zone 11 to about zone 25. In one embodiment, the cam 72 does not rotate with one of first and second wheels, 34, 38.

After the first and second forming members 36, 40 register and cooperatively engage to pinch, crimp, and seal portions of the rope 28 to form beaded rope 44, as previously described, the plunger members 66 may simultaneously move into the first forming members 36. In area C of Figure 3, for example, the first and second forming members 36, 40 begin to disengage after forming the beaded rope 44. This disengagement occurs at a location at or about zone 11. Just prior to this stage in the forming process, the plunger members 66 are not in contact with the beaded rope 44. However, as the forming process proceeds, and at some point in the forming process corresponding to a location at about zone 11, the plunger member 66 begins to contact the beaded rope 44 to push the beaded rope 44 out of the first forming member 36, and, eventually, out of the plane in which first and second wheels 34, 38 rotate.

For example, as shown in Figure 5, the plunger member 66 begins to contact the cam 72 at or about zone 11. At that time, the roller 70 of plunger member 66 begins to traverse the cam profile and gradually push the plunger member 66 further into the first forming member 36 as the roller 70 traverses the cam profile. By about zone 25, roller 70 has traversed substantially the entire length of the cam profile and has pushed the beaded rope 44 entirely out of the first forming member 36. It should be understood, however, that the cam profile is not limited to the shape shown in Figure 5 and may have any shape desired or known in the art. As such, it should also be understood that the plunger members 66 need not push the beaded rope 44 entirely out of the first forming member 36, and may push the beaded rope 44 only a portion of the way out of the first forming member 36 as the plunger members 66 traverse the cam profile.

The inward movement of the plunger members 66 into the first forming members 66 may be halted at a predetermined distance and the plunger members 66 are, thereafter, brought back to a fully retracted position so that a new cycle may begin. As used herein, "cycle" refers to one revolution of the first wheel 34. The predetermined distance that the plunger members 66 are allowed to extend may include a distance that correlates to a position of the plunger member 66 after having pushed the beaded rope 44 entirely out of the first forming member 36. Similarly, the predetermined distance may include a distance that corresponds to from about one-half to about two times the length of the first forming member 36 that the plunger member 66 extends through. It should be understood, however, that the predetermined distance is not limited to the above-mentioned distances and may be determined based on a desired configuration of forming device 18.

As mentioned above, the plunger members 66 operate sequentially to push the beaded rope 44 out of the first forming members 36. As used herein, "sequential" movement of the plunger members 66 refers to the action of a first plunger member 66a with respect to an adjacent and following second plunger member 68b, as is shown, for example, in Figure 6. Generally, with each cycle of the first wheel 34, each plunger member 66 experiences identical movement to the preceding plunger member 66 along the cam 72. After traversing the cam 72, each plunger member 66 may then retract to a starting position until the plunger member 66 begins to contact the cam 72 in a subsequent cycle. For example, during a cycle wherein the first wheel 34 rotates in a counter-clockwise direction, as shown in Figure 6, a first plunger member 66a completes a full cycle just prior to an adjacent and subsequent second plunger member 66b.

The first plunger member 66a and second plunger member 66b may follow identical paths during the cycle, with the exception that the first and second plunger members 66a, 66b will be slightly out of phase by a predetermined amount. The predetermined amount that the first and second plunger members 66a, 66b are out of phase depends upon the number of the plunger members 66 and the first forming members 36 contained on the first wheel 34. For example, if the first wheel 34 includes thirty-six plunger members 66 and first forming members 36, the first and second plunger members 66a, 66b will be about 10° out of phase.

Similarly, because the plunger members 66 act sequentially upon the beaded rope 44 at any given time during the cycle when the plunger members 66 are contacting the cam 72, the first plunger member 66a may extended a first distance that is greater than a second distance extended by the second plunger member 66b, as is shown by Figures 5 and 6. For example, Figure 5 demonstrates that at a given instant of time during the cycle of the first wheel 34, the plunger member 66 located in zone 23 is extended a greater distance than is the adjacent plunger member 66 located in zone 22. For instance, the plunger member 66 located in zone 23 is extended a first distance that is sufficient to push the beaded rope 44 out of the first forming member 36 a distance that is represented by the numeral 75d. Similarly, the plunger member 66 located in zone 22 is extended a second distance that is sufficient to push the beaded rope 44 out of the first forming member 36 a distance that is represented by the numeral 75c. Because the extension of the plunger members 66 corresponds to the distance the beaded rope 44 is pushed out of the first forming member 36, Figure 5 clearly demonstrates that the first plunger member 66a may extend a distance that is greater than the second plunger member 66b. This concept is also illustrated in Figure 6, which shows the plunger members 66a and 66b sequentially acting on the beaded rope 44.

The operation of the plunger members 66 preferably allows the beaded rope 44 to be removed, or pushed, out of the plane in which the first and second wheels 34, 38 rotate. By pushing the beaded rope 44 out of the plane of rotation, the risk of the beaded rope 44 colliding with the rope 28 (as the beaded rope 44 exits the forming device 18 and the rope 28 enters the forming device 18) is substantially reduced. Ensuring that the forming device 18 operates efficiently, without any collisions of confectionery material upon entering and exiting the device, allows the forming device 18 to operate at high-volumes to cost-effectively manufacture confectionery products. Moreover, the plunger members 66 act on the beaded rope 44 to allow for a "controlled fall" of the beaded rope 44 as it is pushed out of the first forming members 36. This controlled fall reduces the risk of damage to the beaded rope 44 and helps ensure that the beaded rope 44 does not separate into individual confectionery pieces as it is removed from the forming device 18.

Figure 6 provides a perspective view of the first wheel 34, the second wheel 38 and the relationship of the plunger members 66 with the first and second forming members 36, 40. Figure 6 illustrates the motion of the confectionery product within the forming device 18. For example, the rope 28 is shown entering the forming device 18 in front of the first and second wheels 34, 38. Upon entering the forming device 18, the rope 28 is pulled into the plane in which the first and second wheels 34, 38 rotate and into the first and second forming members 36, 40, which subsequently mate to form the beaded rope 44 at or about the top of the forming device 18, which corresponds to zones 0-11 of Figure 3.

After the first and second forming members 36, 40 form the beaded rope 44, the first and second forming members 36, 40 begin to disengage at a location corresponding to a location at or about zone 11 of Figure 3. This location is shown in Figure 6 where the plunger members 66 begin to act on the beaded rope 44 to sequentially push the beaded rope 44 out of the plane in which the first and second wheels 34, 38 rotate. As the first wheel 34 continues to rotate counter-clockwise, for example, the plunger members 66 may continue to traverse the cam 72 (not shown) and to extend further into the first forming members 36 to push the beaded rope 44 out of the plane in which the first and second wheels 34, 38 rotate. The plunger members 66 stop acting on the beaded rope 44 at a location corresponding to a location at or about zone 25 in Figure 3. At this stage in the forming process, and as shown by Figure 6, the beaded rope 44 has been pushed entirely out of the plane in which the first and second wheels 34, 38 rotate. Therefore, as the beaded rope 44 exits the forming device 18, it exits in a second plane that forms an angle with the first plane in which the first and second wheels 34, 38 rotate. In one embodiment, the angle formed between the first plane and the second plane is greater than about 5° and less than about 90°. In another embodiment, the angle formed between the first plane and the second plane is greater than about 10° and less than about 90°.

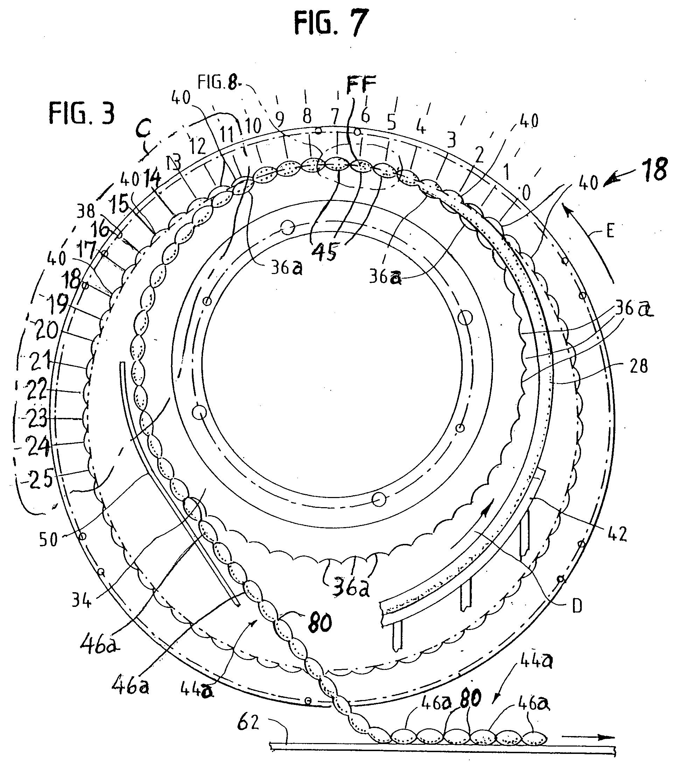

In one embodiment, the first forming members 36a have a first shape and the second forming members 40 have a second shape that is different than the first shape as shown in Figures 7-9. Cooperative engagement between the first and second forming members 36a, 40 occurs along an interface plane FF. Thus, when the first and second forming members 36a, 40 come into full cooperative engagement or are otherwise mated (in one, some, or each of zones 6, 7, and 8, for example), the forming members 36a, 40 form a chamber 45 that is asymmetrical along the length of the interface plane FF. In other words, the portion of the chamber 45 above the interface plane FF has a profile, a shape, an area, and/or a volume different than the profile, the shape, the area, and/or the volume of the portion of chamber 45 below the interface plane FF. This results in a center-filled confectionery piece 46a having an asymmetrical shape that will be discussed in greater detail below.

It is understood that the area or space of each first forming member 36a is bounded by the forming surface on the outer circumference of the first wheel 34 and the interface plane FF. Similarly, the area or space of each second forming member 40 is bounded by the forming surface of the inner circumference of the second wheel 38 and the interface plane FF. The asymmetry of the chamber 45 may result by altering or changing one or more characteristics of the first and second forming members 36a, 40 as desired. In one embodiment, each first forming member 36a may be formed to have a volume that is greater than the volume of each second forming member 40. Thus, when the rope 28 is placed and crimped between the first and second forming members 36a and 40, the amount the rope 28 present in each first forming member 36 is greater than the amount of the rope 28 present in each second forming member 40.

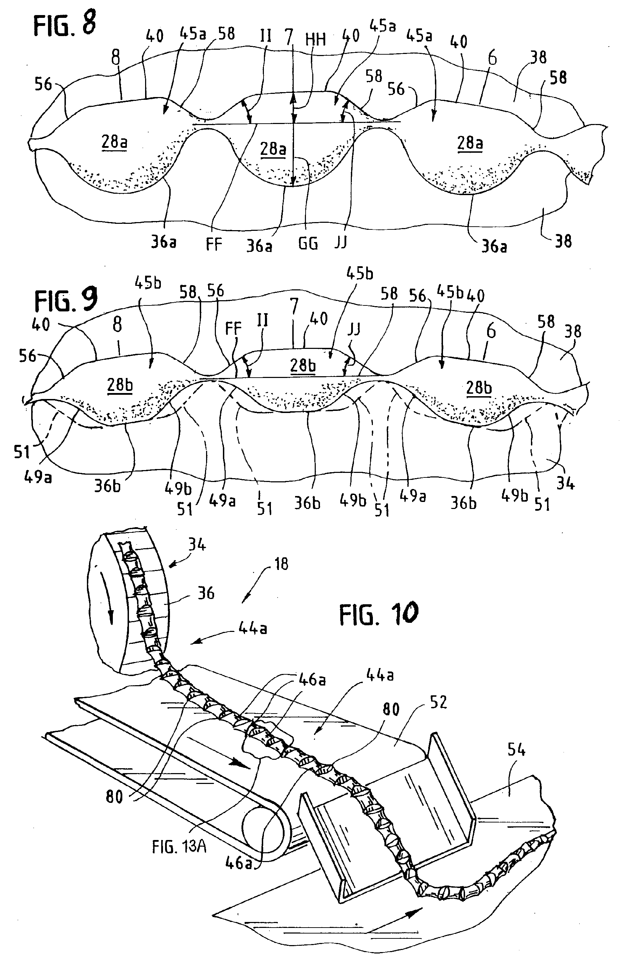

In one embodiment, each first forming member 36a may have a depth GG and each second forming member 40 may have a depth HH as shown in Figure 8. Figure 8 is an enlarged view of area 8 of Figure 7. It is understood that the depth of each forming member 36a, 40 is the distance from the interface plane FF to the point on the forming member surface that is furthest from the interface plane FF. As is shown in Figure 8, depth GG is greater than depth HH. The difference between depths GG and HH yields a chamber 45a that is asymmetric in shape along the interface plane FF. With this greater depth, each first forming member 36a is adapted to receive a greater amount of rope 28 than the second forming members 40 during the crimping and forming process. Accordingly, when the first and second wheels 34, 38 continue rotation and disengage the first forming members 36 from the second forming members 40 (i.e., approximately zones 9-13), one side of the sealed center-filled confectionery piece 28a advantageously releases from the second forming members 40 while the other side of confectionery piece 28a remains, clings, or otherwise is maintained in the first forming members 36a. The confectionery piece 28a remains in the first forming members 36a because the shape of the first forming members 36a allows for a greater volume of the confectionery piece 28a therein, therefore causing the confectionery piece 28a to be more easily released from the second forming members 40. In one embodiment, release of the confectionery piece 28a may be further promoted by blowing chilled air into or across the second forming members 40. The blast of chilled air may occur before, during or just after forming of the confectionery piece 28a.

Further rotation of the first wheel 34 may cause the sealed center-filled confectionery piece 28a to release or otherwise fall from the first forming members 36 by way of gravity. Thus, the provision of first forming members 36a with a greater depth than the depth of the second forming members 40, advantageously yields a forming device 18 that requires no ejection device such as a plunger device or similar device to remove the sealed center-filled confectionery pieces 28a from the forming device.

In one embodiment, each first forming member 36b may have a contoured side portion 49a, 49b as shown in Figure 9. The curve or profile of contoured side portion 49a may be the same or different as the curve or profile of the contoured side portion 49b. The curve of the contoured side portions 49a, 49b may be regular (i.e., sinusoidal for example) or irregular (i.e., wavy for example). The contoured side portions 49a, 49b may also include ridges or edges. The presence of one or both contoured side portions 49a, 49b may result in the first forming members 36b having a shape that is different than the shape of the second forming members 40 along the interface pane FF. Thus, when the first forming members 36b come into mated or cooperative engagement with the second forming members 40, a chamber 45b, which asymmetric in shape along the interface plane FF, is formed.

In one embodiment, the contoured side portions 49a, 49b cause the sealed confectionery pieces 28b to remain in the first forming members 36b as the second forming members 40 disengage or otherwise rotate away from the first forming members 36b. The sealed confectionery pieces 28b may be subsequently released from the first forming members 36b by way of gravity upon further rotation of the first wheel 34 as previously discussed.

The degree of curvature of the contoured side portions 49a, 49b may be seen by comparing the curve profile of the contoured side portions 49a, 49b to the curve profile of conventional first forming members (shown by phantom line 51) that are symmetrical to the second forming members 40. It has been surprisingly found that the provision of one or more contoured surfaces to each first forming member yields a surface to which the sealed center-filled confectionery pieces 28b cling as the second forming members 40 pull away from the first forming members after piece formation. Thus, as the first and second wheels 34, 38 rotate to disengage or un-mate the first and second forming members 36b, 40, no, or substantially no, portion of the sealed center-filled confectionery pieces 28b adhere or otherwise remain on or in the second forming members 40. Moreover, the surface contour of the first forming members 36b can further permit the sealed center-filled pieces 28b to release or otherwise fall freely by way of gravity from the first forming members 36b with further rotation of the first wheel 34.

In a further embodiment, the presence of the contoured side portions 49a, 49b may result in the first forming members 36b having a greater volume and/or a greater surface area than the volume and/or surface area of the second forming members 40. Consequently, a greater amount of the rope 28b may be present in each first forming member 36b having contoured side portions 49a, 49b when compared to the amount of rope present in each second forming member 40 during the forming process. It is understood that the first forming members 36a can include contoured side portions as herein described.

In one embodiment, each second forming member 40 may have one or more tapered portions 56, 58 as shown in Figures 8 and 9. In one embodiment, one or both tapered surface portions 56, 58 may be planar, or otherwise substantially flat or flat. In one embodiment, the first and second tapered surface portions 56, 58 may form respective angles II and JJ with the interface plane FF. The magnitude of angles II and JJ may be the same or different. In one embodiment, one or both angles II, JJ have a size or magnitude from about 30° to about 60°, or from about 36° to about 50°, or from about 45°, or any magnitude or size therebetween. The tapered portions 56, 58 advantageously promote ready release of the confectionery rope from the second forming members 40 as the first and second wheels 34, 38 rotate to disengage the first and second forming members 36a, 40.

An embodiment of the present forming device without having an ejection device may have several advantages. The center-filled confectionery rope 28 is tacky and sticky as it proceeds through the forming device 18. It has been surprisingly found that the configuration of the second forming members 40 in conjunction with the differently shaped first forming members 36a or 36b promotes the rope (or sealed center-filled confectionery piece) to release from the second forming members while simultaneously remaining in the first forming members 36a, 36b as the first and second forming members disengage. Thus, the differently shaped first and second forming members 36, 40 may operate synergistically to ensure that all, or substantially all, of the center-filled confectionery material continuously releases from the second forming members 40 while remaining in the first forming members 36 after the crimping and the sealing stages are complete. The releasability from the second forming members 40 is consistently reliable to the extent that an embodiment of the forming device 18 includes no ejection device or plunger members or similar removal device to remove the formed center-filled confectionery product from the forming members 36. Releasability from the second forming member 40 may also be promoted by blowing chilled air into or across the second forming members 40. The blast of chilled air may occur before, during or just after crimping and sealing of the beaded rope 44. Thus, an advantage of an embodiment of the present forming device 18 is that it may not require any ejection device, plunger device, or plunger member, thereby saving money and inefficiency in high-volume product of center- filled products.

As embodiments of the forming device 18 may include either no plunger members, or plunger members on only one side of the forming device 18, it is possible to monitor the forming process. With conventional forming devices it is difficult and often impossible to monitor or observe the confectionery product crimping, sealing, and forming process as the presence of plunger members on both sides of the forming device 18 obstruct and/or block the view of the forming members and forming chambers.

In one embodiment, a transparent panel may be placed along the side of the forming device 18 permitting visual inspection of the forming members 36a, 40 and the forming chambers during the crimping, sealing, and forming operation. The transparent panel may be releasably attached to the forming device 18 to allow for maintenance and care of the forming members 36, 40 and the wheels 34, 38. The panel may also protect the confectionery rope and/or the confectionery product from dirt or other contaminates. Nonlimiting examples of suitable materials for the transparent panel include glass, a transparent polymeric material, or polycarbonate.

In one embodiment, a temperature differential may be present between the first forming members 36 and the second forming members 40. The second wheel 38 may be configured to receive a cold fluid (i.e., a gas or a liquid) which may be introduced into or otherwise pass through (continuously or intermittently) the second wheel 38 and lower the temperature of the second forming members 40. Thus, the second forming members 38 may be at a lower temperature than the temperature of the first forming members 36, 36a, or 36b. The first wheel 34 may be configured to receive a cold fluid to chill or cool the first forming members 36, 36a, or 36b in an similar manner.

Returning to Figure 7, continued rotation of the first and second wheels 34, 38, increases the distance between the first and the second forming members 36a, 40 to disengage the first forming members 36a from the second forming members 40. This results in the formation of a beaded rope 44a having a plurality of sealed center-filled confectionery pieces 46a attached to each other as shown in zones 9-13. Beaded rope 44a includes a plurality of sealed and center-filled confectionery pieces 46a attached to one another at crimp segments 80. It is understood that the zones 0-13 are for illustration purposes and that the pinching, crimping, and sealing forces imposed upon the rope 28 by the first and second forming members 36a, 40 may occur at one, some, or all of zones 0-13. Further, it is understood that the zones 14-25 are for illustration purposes and that an ejection device may act at one, some, or all of zones 14-25.

As the beaded rope 44a moves out of an area where the beaded rope 44a is pinched, crimped, and sealed, the beaded rope 44a is released from the second forming members 40 and remains in the first forming members 36a as discussed above. Continued rotation of the first wheel 34 allows gravity and the weight of the free-hanging portion of the beaded rope 44a to act upon the portion of beaded rope 44a still in the first forming members 36a. This enables the beaded rope 44a to be continuously released from the first forming members 36a. Once free from the first forming members, the beaded rope 44a may move into contact with a guide 50, as previously mentioned. The guide 50 supports and directs the beaded rope 44a onto a transport device 52 as shown in Figures 7 and 10. The transport device 52 (such as a conveyor) may transport or otherwise deliver the beaded rope 44a to the cooling chamber 20 and subsequently to a tempering device. Figure 10 shows the beaded rope 44a leaving the first forming members 36a, the beaded rope 44a being received by the transport device 52. A second transport device 54 may receive the beaded rope 44 and transport the beaded rope 44a in a different direction.

As mentioned above, the beaded rope 44a may be removed from one or both of the first and second forming members 36a, 40, by an ejection device. The ejection device may be either a contact or a non-contact ejection device. As used herein, a "non-contact" ejection device is a device which can remove confectionery material from a forming member 36 (or 36a, or 36b) and/or the forming members 40 without touching the confectionery material. In one embodiment, the ejection device is a contact ejection device including plunger members, as previously described. Similar to the plunger members, the non-contact ejection device may be designed to sequentially push the confectionery material out of a plane in which the first and second wheels 34, 38 rotate. The non-contact ejection device may also be designed to push the confectionery material away from (i.e., out of contact with) the forming members 36 (or 36a, or 36b) and/or forming members 40 without touching the confectionery material.

In one embodiment, the forming device 18 may include a non-contact ejection device that removes confectionery material from the forming members 36 (or 36a, or 36b) and/or forming members 40 without touching the confectionery material. The confectionery material may include sealed center-filled confectionery pieces, broken or damaged confectionery pieces, portions of the confectionery rope 28 (or 28a or 28b), and/or center-fill material that adheres to forming members 36 (36a, 36b) and/or 40. The non-contact ejection device may include a device for discharging a pressurized fluid from across, into, through, and/or from first forming member 36a (or 36 or 36b) and/or second forming member 40. Therefore, the non-contact ejection device may discharge a pressurized fluid in one of a direction that is parallel to the plane in which the first and second wheels 34, 38 rotate and a direction that is perpendicular to the plane in which the first and second wheels 34, 38 rotate.

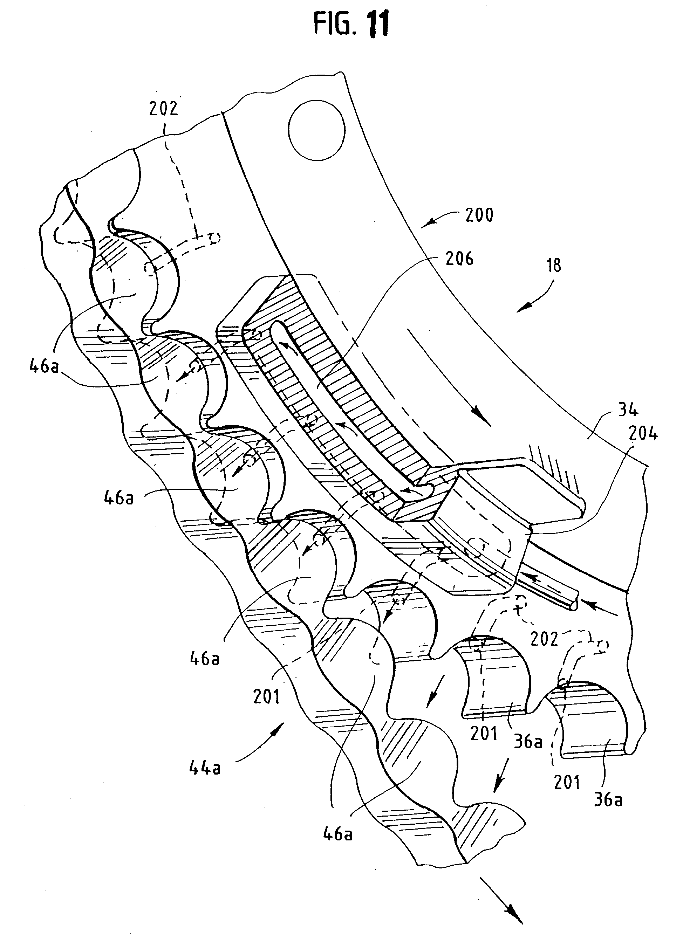

In one embodiment, a non-contact ejection device 200 is provided and includes a source of a pressurized fluid in fluid communication with an opening located in at least one of the forming members 36a, 40. Figure 11 shows the first forming member 36a with an opening 201. It is understood that each forming member 36a may include an opening 201. It is further understood that any first forming member (36, 36a, 36b) as described herein may include the opening 201. Each second forming member 40 may have an opening 201 in a similar manner. The opening 201 may be used to discharge a flow of pressurized fluid, such as a jet of air or a similar gas, to assist in the release of the sealed center-filled confectionery piece 46a from one or both forming members 36a, 40.
The opening 201 may have a diameter from about 0.5 mm to about 2.0 mm or any value therebetween. In one embodiment, the opening 200 has a diameter of about 1.5 mm.

In one embodiment, the first wheel 34 may include a conduit 202 which extends through a portion of the body of the first wheel 34, the conduit 202 placing the opening 201 in fluid communication with a source of pressurized fluid 204. The first wheel 34 may be configured such that a respective conduit 202 is in fluid communication with each opening 201. The source 204 of the pressurized fluid may include an outlet 206. The source 204 may be located proximate to or otherwise adjacent to the first wheel 34. In other words, the source 204 is in fluid communication with the outlet 206.

After formation of the sealed center-filled confectionery piece 46a, the first wheel 34 may rotate to place the conduit 202 in fluid communication with the outlet 206 as shown in Figure 11. The source 204 generates a pressurized or compressed fluid which passes through conduit 202 and flows from the opening 201. This pressurized flow or jet of fluid discharges the sealed center- filled confectionery piece 46a from the first forming member 36a. It is understood that the sealed center-filled confectionery piece 46a may fall freely from the first forming member 36a by way of simple gravity as discussed above. The pressurized flow of fluid emitted from the opening 201 may be used to release the sealed center-filled confectionery piece 46a alone or in addition to gravity. In this way, it is assured that the sealed center-filled confectionery piece 46a will not adhere to the first forming member 36 (or to the second forming member 40). Nonlimiting examples of suitable pressurized fluid include liquids such as water and food-acceptable oils and gasses such as air, nitrogen, and argon. The gas may be compressed and/or chilled or cooled to further promote release of the sealed center-filled confectionery piece 46a from the first forming member 36a.

In one embodiment, the outlet 206 may be configured such that the pressurized fluid is ejected from the opening 201 while the first wheel 34 continues to rotate. The outlet 206 may have an extended length as shown in Figure 11. The first wheel 34 rotates to place the conduit 202 in fluid communication with the outlet 206. As the first wheel 34 continues to rotate, each conduit 202 moves along the outlet 206. Pressurized fluid passes through the outlet 206, through each conduit 202, and through the openings 201 as long as fluid communication is maintained between the each conduit 202 and the outlet 206. Thus, the pressurized fluid may be discharged in a direction that is substantially parallel to the plane in which the first and second wheels 34, 38 rotate. Continued rotation of the first wheel 34 eventually moves each conduit 202 out of fluid communication with the outlet 206, halting the flow of the pressurized fluid from the opening 201. It is understood that the second wheel 38 and second forming members 40 may be configured with openings, conduits, and a fluid source in a similar manner.

In one embodiment, the fluid source 204 may be a vortex compressor or similar device. A vortex compressor rotates a gas at high speed, separating the gas into hot and cold streams as is commonly known in the art. A vortex compressor may be used to generate a pressurized stream of gas (i.e., air) with a temperature from about 10° C to about -50°C or any temperature therebetween. Thus, the pressurized fluid of the non-contact ejection device may have a temperature from about 10°C to about -50°C or any temperature therebetween.

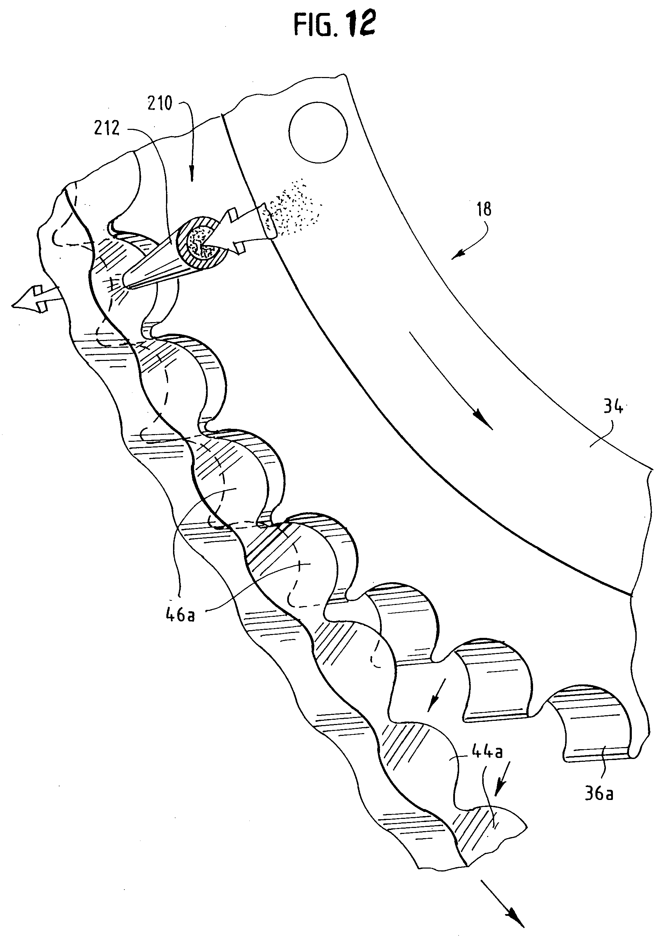

In one embodiment, the forming device 18 may include a non-contact ejection device 210 as shown in Figure 12. The non-contact ejection device 210 may include a nozzle 212 proximate to at least one of the forming members, the nozzle 212 in fluid communication with a source (not shown) of a pressurized fluid. The ejection device 210 may be located alongside the first wheel 34 so as to position the nozzle 212 adjacent to the first forming members 36a (or 36, 36b). As the first and second wheels 34, 38 rotate to disengage the first and second forming members 36a, 40 after formation of the fluid filled confectionery piece 46a, the nozzle 212 blows, ejects, or jets a pressurized fluid across, through or into each passing first forming member 36a. This blast of pressurized fluid across the forming member 36a can eject the fluid filled confectionery piece 46a from the first forming member 36a in a direction that is substantially perpendicular to the plane in which the first and second wheels 34, 38 rotate. The pressurized fluid may be any fluid as discussed above. In one embodiment, the pressurized fluid from the nozzle 212 may be a cooled or super-cooled gas ejected under pressure and source of the pressurized fluid may be a vortex compressor as discussed above. The nozzle 212 may be located next to the second forming members 40 to eject the fluid filled confectionery piece from the second forming members 40 in a similar manner. The pressure of the pressurized fluid ejected from the nozzle 212 may be adjusted so that the pressurized fluid does not change or otherwise alter the shape of the sealed fluid filled confectionery piece 46a (or 46).

In one embodiment, the ejection device 210 may include a plurality of nozzles 212. A first nozzle may be positioned alongside the first forming members 36a (or 36, 36b). A second nozzle may be positioned alongside the second forming members 40. In this way, it is ensured that no confectionery material adheres to the forming members 36a, 40 after the crimping, sealing and forming process is complete.

In one embodiment, multiple nozzles 212 may be placed along either the first forming members 36a (36, 36b) and/or along side the second forming members 40. The pressure of the fluid ejected from the nozzle 212 may be adjusted to ensure that the fluid filled confectionery pieces leave the forming members as the beaded rope. Alternatively, the fluid pressure may be adjusted so that the force of the fluid pressure across, into and/or through the forming member(s) separates the individual fluid filled confectionery pieces 46a (or 46) from each other as they exit the forming device 18.

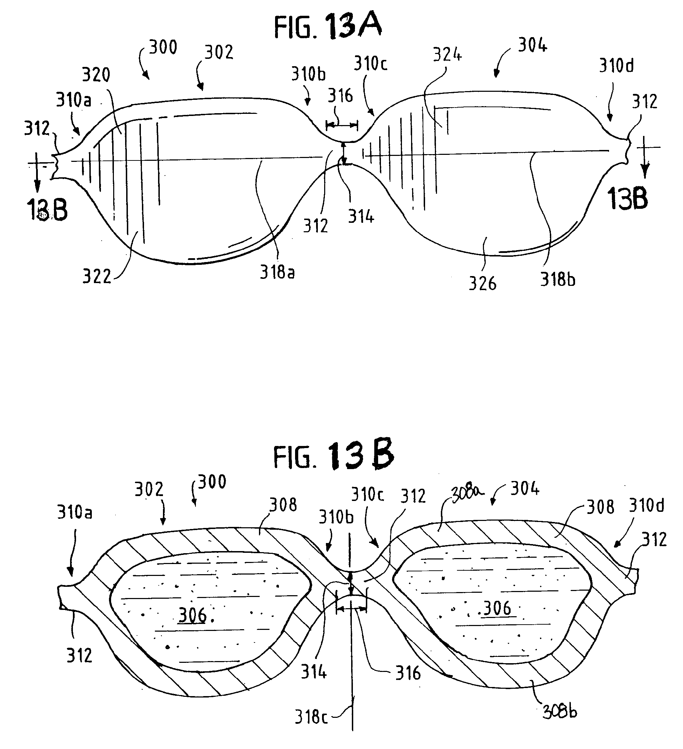

In one example, a confectionery product 300 is provided as shown in Figures 13 A and 13B. Figure 13A is an enlarged elevation view of area 13 A of Figure 10. It is understood that confectionery product 300 may include some, all, or part of beaded rope 44a. The confectionery product 300 may be an intermediate product or a finished product. The confectionery product 300 includes a first piece 302 and a second piece 304, each piece having respective center-fill portions and respective outer portions 308a, 308b as shown in Figures 13A and 13B. The center-fill portions 306a, 306b and the outer portions 308a, 308b respectively correspond to the center-fill portion and the outer portion of the rope 28. Each piece 302, 304 may have sealed ends 310a, 310b (for piece 302) and sealed ends 310c and 310d (for piece 304). A land 312 attaches or otherwise connects sealed end 310b of the first piece 302 with the sealed end 310c of the second piece 304. It is understood that the beaded rope 44 may include lands in a similar manner.

The land 312 is formed as a result of the cooperative engagement of the first and second forming members 36a, 40 as discussed above. The crimping pressure imposed upon the rope 28a when the first and second forming members 36a, 40 are in full cooperative engagement seals each piece 302, 304 and forms the land 312. Thus, the land 312 includes, or is an extension of, the outer portions 308a, 308b. In one example, the land 312 includes only the outer portion 308a and/or 308b, with no, or substantially no, fill material present in the crimp segment 312.

In one example, the land 312 has a thickness 314. The thickness 314 may be constant or may vary along a length 316 of the land. The thickness 314 may have a length from about 0.05 mm to about 0.25 mm or any value therebetween. In one example, the thickness may be from about 0.1 mm to about 0.2 mm. The length 316 may be from about 0.05 mm to about 2.0 mm or any value therebetween. In one example, the length 316 may be from about 0.5 mm to about 1.0 mm.

The land 312 may be made of any material from which the outer portion of the rope 28 is made as discussed herein. In one example, the land 312 may be chewing gum, chewy confectionery, and combinations thereof. In a further example, the land 312 may be solely chewing gum. In other words, the center-fill material is absent or wholly absent in the land 312 as shown in Figure 13B.

In one example, a plane 318a extends through the sealed ends 310a and 310b of the first piece 302. A plane 318b extends through the sealed ends 310c and 310d of the second piece 304 in a similar manner. In one example, the first piece 302 may be asymmetrical along the plane 318a. In other words, upper portion 320 of piece 302 located above the plane 318a differs in size, shape, and/or volume when compared to the size, shape, and/or volume of the lower portion 322 of the piece 302. It is understood that the first piece 302 is present on both sides of the plane 318a. Similarly, the second piece 304 has an upper portion 324 which is asymmetrical to lower a portion 326 along the plane 318b. The second piece 304 thereby is present on both sides of the plane 318b. As the land 312 imparts flexibility to the confectionery product 300, it is understood that planes 318a, 318b may or may not be coplanar, parallel, intersecting, and/or skewed.

In one example, a plane 318c extends through the land 312 as shown in Figure 13B. The plane 318c is substantially normal to, or normal to, the land 312. The first piece 302 is symmetrical to, or substantially symmetrical to, the second piece 304. In other words, with the plane 318c as the reference plane, the first piece 302 is substantially a mirror-image, or a mirror-image, to the second piece 304. In one example, the plane 318c may be a plane of symmetry with respect to the first piece 302 and the second piece 304. Thus, the shape, size and configuration of the first piece 302 and the second piece 308 is identical or substantially identical.

Similar to the rope 44a, the confectionery product 300 may have the form of a rope and include a plurality of sealed center-filled pieces, adjacent pieces being attached to each other at the sealed ends by way of lands located between sealed ends of adjacent pieces. Thus, confectionery product 300 may emerge from the forming device 18 as a continuous, unitary, bead-like or "rosary-like" strand.

The confectionery product 300 (as well as the beaded rope 44a) carries many advantages. The attachment of adjacent sealed center-filled pieces by way of the lands 312 enables the confectionery product 300 to move through and from the forming members 36a, 40 as a unitary mass as opposed to discrete individual center filled pieces. This bead-like or rosary-like configuration of the confectionery product 300 protects the individual sealed pieces during production. The first piece 302, the second piece 304, and the land 312 form an integral confectionery product 300 which increases the mass of the confectionery product 300 thereby increasing the gravitational pull on the confectionery product 300 and promoting the release and/or separation of the confectionery product 300 from the forming members 36a, 40 solely by way of gravity and without an ejection device. As mentioned previously, however, the forming device 18 may also utilize an ejection device. The unitary and integral structure of the confectionery product 300 imparts durability and flexibility to the confectionery product 300 enabling high speed production of the confectionery product. Confectionery product 300 more readily moves between processing stations when compared to individual pieces exiting the forming device 18 as discrete and separate formed confectionery pieces. The unitary mass of the confectionery product 300 yields more control of the product 300 upon leaving the forming device 18 and upon transport devices compared to individual pieces coming from the forming device. The lands 312 provide the confectionery product 300 with flexibility to absorb processing forces to keep the confectionery product 300 intact. If desired, the
confectionery product 300 may be broken into individual center-filled confectionery product by way of tumbling, a vibration belt, or the like. It is understood that the beaded rope formed by way of forming members 36a, 40 carries similar advantages.

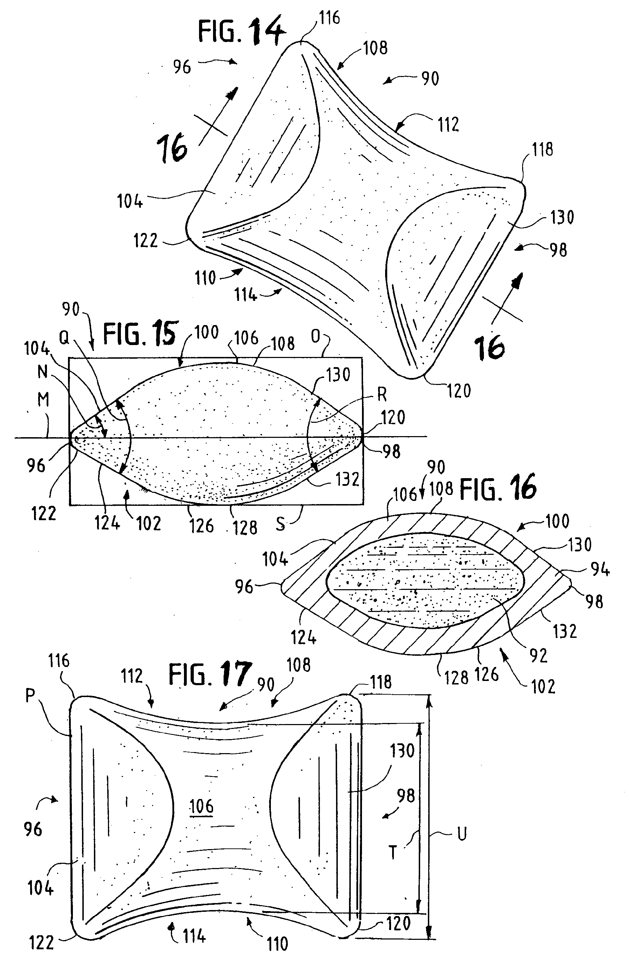

In one example, the individual confectionery pieces 46 of beaded rope 44 may be separated from each other to form a plurality of confectionery products such as confectionery product 90 as shown in Figures 14-17. The confectionery product 90 may include a fluid center 92, an outer portion 94, and first and second ends 96 and 98. In one example, ends 96 and 98 may be sealed ends, sealed as a result of the forming process performed by forming device 18 as previously discussed. A plane M may extend through the confectionery product 90 as shown in Figure 15. In one example, the plane M may bisect the body to define an upper portion 100 and a lower portion 102, the upper and lower portions 100, 102 being equal or substantially equal in size and shape. In one example, the upper and lower body portions 100, 102 may be mirror-images of each other. In a further example, the plane M may extend through first and second ends 96 and 98.

In one example, the confectionery product 90 may include a tapered portion (or first tapered portion) 104 that extends to an upper surface 106. The first tapered portion 104 may intersect plane M to form an angle N. In one example, the first tapered portion 104 may be planar or otherwise substantially flat or flat. In yet a further example, the tapered portion 104 may intersect the plane M at first end 96. Angle N may have a size from about 30° to about 60°, or from about 33° to about 55°, or from about 33° to about 45°, or from about 35° to about 40°, or any size therebetween.

In one example, the upper surface 106 may be located at a middle section of the confectionery product 90 as shown in Figure 15. In one example, the upper surface 106 may be an uppermost surface of the confectionery product. In yet a further example, the upper surface 106 may include a planar portion 108 (or a flat portion), that is substantially parallel to, or parallel to, the plane M.

In one example, the confectionery product 90 may include an upper circumference O extending from the first end 96 to the second 98 along the upper surface of the confectionery product. Although upper circumference O is shown as a straight line in Figure 8, it is understood the upper circumference O extends along the upper surface of the product and may not necessarily be a straight line. The first tapered portion 104 may have a length that is at least 25%, or from about 25% to about 35% the length of the upper circumference O.

In one example, the confectionery product 90 may include a first side 108 and a second side 110. First and second ends 96, 98 and first and second sides 108, 110 may form a perimeter P as best seen in the plan view of the confectionery product provided by Figure 17. The first and second sides 108, 110 may have respective inwardly curved portions 112 and 114. The inwardly curved portions 112, 114 may provide the perimeter P with an hour-glass shape or a dog-bone shape or otherwise a concave shape. In one example, the confectionery product 90 may have a width ratio from about 65% to about 85%, or any value therebetween. In a further example, the width ratio may be from about 70% to about 83%, or from about 75% to about 80%, or from about 76% to about 79%. The width ratio is calculated by determining the minimum width of the confectionery product 90, distance T of Figure 17, and dividing this value by the maximum width of the confectionery product, distance U of Figure 17. The minimum width (or T) of the confectionery product 90 may typically be the distance between the innermost portions of the inwardly curved side portions 112, 114. The maximum width (or U) of the confectionery product 90 may typically be the distance between an end on one side and an opposing second end located on the other side of the confectionery product 90 (i.e., the distance or length between end 118 and end 120).

Table 1 below sets forth non-limiting examples of dimensions for the confectionery product 90.

**Table 1**

| Fluid-filled confectionery product | Width Center (mm) (minimum, width) | Width End (mm) (maximum width) | Length (mm) | Width Ratio |
|---|---|---|---|---|
| Uncoated | 12.2 | 15.2 | 18.1 | 80% |
| Coated | 13.1 | 16.4 | 19.3 | 80% |

In a further example, the confectionery product 90 may have a pillow shape as shown in Figures 14 and 17, for example.

In one example, the confectionery product 90 may have edges 116, 118, 120, and 122. The edges 116-122 may be rounded or otherwise curved. The rounded edges 116-122 advantageously promote uniform coating of the confectionery product. In addition the rounded edges 116-122 reduce the amount of chipping experienced by confectionery product during processing and/or handling.

In one example, the fluid center 92 may be any fluid or flowable material as discussed herein. Nonlimiting examples of suitable compositions for the fluid center 92 include a liquid, a semi-liquid, a gel, a paste, a semi-solid, a flowable solid, and combinations thereof. In a further example, the outer portion 94 may be any confectionery material as discussed herein. Nonlimiting examples of suitable confectionery materials for outer portion 94 may include chewing gum, chewy confectionery, and combinations thereof. In yet a further example, the fluid center 92 may be a flavored syrup and the outer portion 94 may be a chewing gum. In one example, the fluid center may be from about 5% to about 25% by weight, or from about 10% to about 15% by weight of the confectionery product.

In one example, the confectionery product 90 may include a coating. The coating may include any suitable coating material such as, for example, sugars, polyols, or combinations thereof to form a crystalline or glassy coating. The sugars or polyols may be, for example, a component of a syrup or spray that is applied to form the coating. The coating may include a sweetener, a flavorant, a film forming agent, a colorant, a sensation producing ingredient, and combinations thereof. The sweetener for the coating may be sugar, sugar-based, or sugar- free. Non-limiting examples of suitable sweeteners include, maltitol, sorbitol, erythritol, mannitol, isomalt, lactitol, xylitol and combinations thereof. High intensity sweeteners may also be utilized in the coating. In one example, the coating may be present in an amount of from about 10% to about 50% by weight, or from about 25% to about 35% by weight, or any value therebetween of the confectionery product 90. Nonlimiting examples of suitable sensation producing ingredient may include a cooling agent, a food grade acid, a flavorant, and combinations thereof. The coating may be a hard, shiny, outer-shell coating. The coating made include sugar or may be sugarless. The coating may be applied in numerous thin layers of material in order to form an appropriate uniform coating. The coating materials may be applied to the confectionery product 90 in liquid and/or in powder (or dry charge) form, in an alternating manner as is commonly known in the art.

In one example, the coating may be achieved by using two coating syrups, one syrup with a Brix value from about 70% to about 73% and a second syrup having a Brix value from about 69% to about 71.5%. This coating syrup combination has advantageously been found to provide a uniform or substantially uniform coating about the entire outer surface of the confectionery product 90 - including rounded edges 116-122. These two syrups are thinner in consistency than standard coating syrup combinations which typically utilize a first syrup with a Brix value of about 73.5% and a second syrup with a Brix value of about 72%. In a further example, coating process parameters such as air temperatures, pan rotation rate, alternating dry (or powder) and syrup additions, and pause times may be adjusted to produce a desired coating appearance as is commonly known in the art.

In one example, the amount of liquid coating material and dry coating material may be reduced from about 5% to about 10% when compared to the amounts of liquid and dry coating material used in conventional coating processes.

In one example, the size or the amount of the powder shots (i.e., the dry charges) may be reduced at each coating material addition stage as the coating process progresses. For example, a coating process having fifteen addition stages may begin by adding about 6.5 kg dry coating material (or powder) to individual confectionery pieces 90 in a coating device. This amount may be decreased at each subsequent addition stage to a final addition of dry coating material in the amount of about 1.8 kg. In one example, substantially no, or no, dry coating material may be added at the later addition stages - with only liquid coating material being added at the later addition stages. This gradual reduction in the amount of dry charge added during the coating process may advantageously be used to apply a uniform coating over the hour-glass shaped and/or the pillow-shaped confectionery product 90.

In a further example, the drying temperature may be increased as the coating process progresses. For example, a starting drying temperature of about 26°C may be increased to a temperature of about 33°C during as the coating process proceeds. In one example, the drying temperature may not exceed 33°C. This drying temperature may be lower than drying temperatures applied in conventional coating processes, which is typically about 40°C.

In one example, the confectionery product 90 has a weight from about 1.8 grams to about 2.4 grams, or about 2.2 grams, or any weight therebetween. The weight may or may not include the weight of the coating.

In one example, the confectionery product 90 may include a second tapered portion 124 extending from the first end 96 to a lower surface 126. The first tapered portion 104 and the second tapered portion 124 may form an angle Q as shown in Figure 15. Angle Q may have a magnitude from about 60° to about 120°, or from about 66° to about 110°, or from about 70° to about 90°, or from about 75° to about 85°, or any magnitude therebetween.

In one example, the lower surface 126 may be located at a middle section of the confectionery product 90 as shown in Figure 15. In one example, the lower surface 126 may be a lowermost surface of the confectionery product 90. In yet a further example, the lower surface 126 may include a planar portion 128 (or a flat portion), that is substantially parallel to, or parallel to, the plane M.

In one example, the confectionery product 90 may include a third tapered portion 130 extending from the second end 98 to the upper surface 106 and a fourth tapered portion 132 extending from the second end 98 to the lower surface 126. The third and fourth tapered portions 130, 132 may form an angle R as shown in Figure 15. Angle R may have a magnitude from about 60° to about 120°, or from about 66° to about 110°, or from about 70° to about 90°, or from about 75° to about 85°, or any magnitude therebetween. In one example, angle Q and angle R may have different magnitudes. In a further example, angle Q and angle R may have the same, or substantially the same, magnitude.

In one example, first tapered portion 104 and the third tapered portion 130 may have a combined length that is at least about 50% of the length of the upper circumference O. In a further example, the second tapered portion 124 and the fourth tapered portion 132 may have a combined length that is at least 50% of the length of the lower circumference S.

In one example, each of the tapered portions 104, 124, 130, 132 may have a surface area that may be from about 8% to about 40% of the overall surface area of the upper/lower portion 100, 102 upon which the tapered portion is located. For example, the first tapered portion 104 may have a surface area that may be from about 8% to about 40% of the total surface area of upper portion 100. In one example, the combined surface areas of the first and third tapered portions 104, 130 may be from about 10% to about 80%, or from about 15% to about 75%, or from about 18% to about 20% (or any value therebetween) of the total surface area of the upper portion 100. In a further example, the combined surface area of the first and third tapered portions 104, 130 may be about 19% of the total surface area of the upper portion 100.

In a further example, the combined surface areas of the second and the fourth tapered portions 124, 132 may be from about 10% to about 80% (or any value therebetween) of the entire surface area of the lower portion 102. In one example, the combined surface areas of the second and fourth tapered portions 124, 132 may be from about 10% to about 80%, or from about 15% to about 75%, or from about 18% to about 20% (or any value therebetween) of the total surface area of the lower portion 102. In a further example, the combined surface area of the second and fourth tapered portions 124, 132 may be about 19% of the total surface area of the lower portion 102.

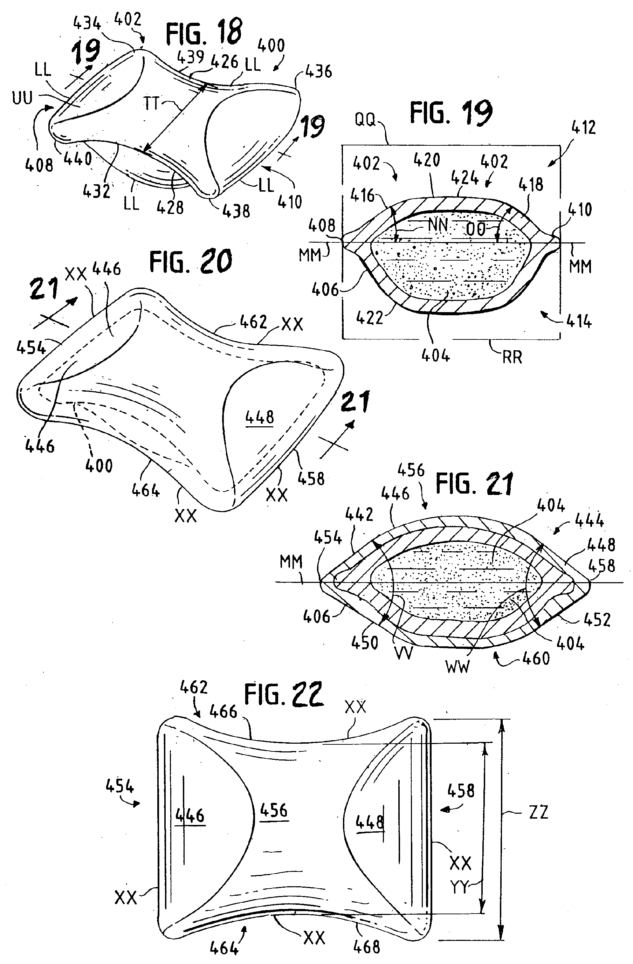

In one example, the individual confectionery pieces 46a of beaded rope 44a may be separated from each other at the crimp segments 80 (or separated at lands 312) to form a plurality of confectionery products such as confectionery product 400 as shown in Figures 18-22. The confectionery product 400 may include a body 402 having an inner portion 404, an outer portion 406, and first and second ends 408 and 410. In one example, ends 408 and 410 may be sealed ends, sealed as a result of the forming process performed by forming device 18 as previously discussed. A plane MM may extend between or through the ends 408, 410 and through the confectionery product 400 as shown in Figure 19. In one example, the plane MM may divide the body 402 to define an upper portion 412 and a lower portion 414. As can be seen in Figure 19, the upper portion 412 is different in shape when compared to the shape of the lower portion 414. This difference in shape between portions 412, 414 results in the body 402 being asymmetrical along the plane MM. In other words, upper and lower portions 412, 414 are not mirror images of each other with respect to plane MM. Thus, the plane MM divides the body 402 into unequal portions, giving the body 402 a shape which is not symmetrical or a shape that is not equal on both sides of the plane MM. It is understood that portions of the confectionery product 400 are present on both sides of the plane MM.

In one example, the confectionery product 400 may include a tapered portion (or first tapered portion) 416 that extends to an upper surface 420. The first tapered portion 416 may intersect plane MM to form an angle NN. In one example, the first tapered portion 416 may be planar or otherwise substantially flat or flat. In yet a further example, the tapered portion 416 may intersect the plane MM at first sealed end 408. Angle NN may have a size from about 30° to about 60°, or from about 33° to about 55°, or from about 33° to about 45°, or from about 35° to about 40°, or any size therebetween.

In one example, the confectionery product 400 may include a second tapered portion 418 that extends from the second end 410 to the upper surface 420. The second tapered portion 418 may intersect the plane MM to form an angle OO. In one example, the second tapered portion may be planar or otherwise substantially flat. The magnitude of the angle OO may be the same or different from the magnitude of the angle NN. In one example, the angle OO may have a magnitude from about 30° to about 60°, or from about 33° to about 55°, or from about 33° to about 45°, or from about 35° to about 40°, or any size therebetween. In a further example, angles NN and OO have the same magnitude.

In one example, the upper surface 420 may be located at a middle section of the confectionery product 400 as shown in Figure 20. In one example, the upper surface 420 may be an uppermost surface of the confectionery product 400. In yet a further example, the upper surface 420 may include a planar portion 424 (or a flat portion), that is substantially parallel to, or parallel to, the plane MM.

In one example, the confectionery product 400 may include an upper circumference QQ extending from the first end 408 to the second end 410 along the upper surface 420 of the confectionery product 400. Although upper circumference QQ is shown as a straight line in Figure 19, it is understood the upper circumference QQ extends along the upper surface of the product 400 and may not necessarily be a straight line. The first tapered portion 416 may have a length that is at least 25%, or from about 25% to about 35% the length of the upper circumference QQ.

In one example, the confectionery product 400 may include a lower circumference RR extending from the first end 408 to the second end 410 along a lower surface 422 of the confectionery product 400. Although lower circumference RR is shown as a straight line in Figure 19, it is understood the lower circumference RR extends along the lower surface of the product and may not necessarily be a straight line. In one example, the lower circumference RR is greater than the upper circumference QQ.

In one example, the confectionery product 400 may include a first side 426 and a second side 428 as shown in Figure 18. The first and second ends 408, 410 and the first and second sides 426, 428 may form a perimeter LL. The first and second sides 426, 428 may have respective inwardly curved portions 430 and 432. The inwardly curved portions 430, 432 may provide the perimeter LL with an hour-glass shape or a dog-bone shape or otherwise a concave shape. In one example, the confectionery product 400 may have a width ratio from about 65% to about 85%, or any value therebetween. In one example, the width ration may be from about 70% to about 80%. The width ratio may be calculated by determining the minimum width of the confectionery product 400, distance TT of Figure 18, and dividing this value by the maximum width of the confectionery product, distance UU of Figure 18 as discussed above. In one example, the confectionery product may have the dimensions as set forth in Table 1 above. In a further example, the confectionery product 400 may have a pillow shape as shown in Figure 18, for example.

In one example, the confectionery product 400 may have edges 434, 436, 438, and 440. The edges 434-440 may be rounded or otherwise curved. The rounded edges 434-440 advantageously promote uniform coating of the confectionery product 400. In addition the rounded edges 434-440 reduce the amount of chipping experienced by confectionery product during processing and/or handling.

In one example, the inner portion 404 may be any fluid or flowable center-fill material as discussed herein. Nonlimiting examples of suitable compositions for the inner portion 404 include a liquid, a semi-liquid, a gel, a paste, a semi-solid, a flowable solid, and combinations thereof. In a further example, the outer portion 406 may be any confectionery material as discussed herein. Nonlimiting examples of suitable confectionery materials for outer portion 406 may include chewing gum, chewy confectionery, and combinations thereof. In yet a further example, the inner portion 404 may be a flavored syrup and the outer portion 406 may be a chewing gum. In one example, the inner portion 404 may be from about 5% to about 25% by weight, or from about 10% to about 15% by weight of the confectionery product.

In one example, a coating 442 may be applied to some or all of the body 402 to form a coated confectionery product 444 as shown in Figures 20-22. The coating 442 may be any coating/coating material as discussed above. The coating 442 may be applied in any suitable manner as discussed above.

In one example, the coating material may be applied to the confectionery product 400 to mask, cover, or otherwise conceal the asymmetrical shape of the body 402. The coating 442 may cover the body 402 so that the coated confectionery product 444 is symmetrical along the plane MM as shown in Figure 21. Thus, the asymmetrical confectionery product 400 may be used as a core to advantageously form a finished coated confectionery product that is symmetrical and aesthetically pleasing to consumers. For example, the confectionery product 400, shown with phantom lines in Figure 20, is covered with the coating 442 to form the coated confectionery product 444.

In one example, the coated confectionery product 444 may include first, second, third, and fourth tapered portions 446, 448, 450, and 452 as shown in Figure 21. The tapered portions 446-452 may be planar, flat, or substantially flat as previously discussed. The first tapered portion 446 may extend from a first end 454 to an upper portion 456. Similarly, the second tapered portion 448, may extend from a second end 458 to the upper portion 456. The third tapered portion 450 may extend from the first end 454 to a lower portion 460. The fourth tapered portion 452 may extend from the second end 458 to the lower portion 460. The upper and lower portions 456, 460 may include planar portions. In other words, some or all of either or both of upper and lower portions 456, 460 may be parallel to, or substantially parallel to, the plane MM.

The first tapered portion 446 and the third tapered portion 450 may form an angle W as shown in Figure 21. Similarly, the second and fourth tapered portions 448, 452 may form an angle WW. The magnitudes of angles VV and/or WW may be from about 60° to about 120°, or from about 66° to about 110°, or from about 70° to about 90°, or from about 75° to about 85°, or any magnitude therebetween. The magnitude of angles VV and WW may be the same or different. In one example, the magnitudes of the angles VV and WW may be the same or substantially the same. Angles VV and WW having the same or substantially the same magnitude advantageously contribute to the symmetry of the coated confectionery product 444.

In one example, the coated confectionery product 444 may include a first side 462 and a second side 464 as shown in Figures 20 and 22. The first and second ends 454, 458 and the first and second sides 462, 464 may form a perimeter XX. The first and second sides 462, 464 may have respective inwardly curved portions 466 and 468. The inwardly curved portions 466, 468 may provide the perimeter XX with an hour-glass shape or a dogbone shape or otherwise a concave shape. In one example, the coated confectionery product 444 may have a width ratio from about 65% to about 85%, or any value therebetween. In one example, the width ration may be from about 70% to about 80%. The width ratio may be calculated by determining the minimum width of the coated confectionery product 444, distance YY of Figure 22, and dividing this value by the maximum width of the confectionery product, distance ZZ of Figure 22 as previously discussed. The minimum width (or YY) of the confectionery product 444 may typically be the distance between the innermost portions of the inwardly curved side portions 466, 468. The maximum width (or ZZ) of the confectionery product 444 may typically be the distance between an end on one side and an opposing second end located on the other side of the coated confectionery product 444 (i.e., the distance or length between first end 454 and second end 458). The width ratio for the coated confectionery product 444 may be any value previously discussed for the width ratio of the confectionery product 400.

In one example, the coated confectionery product 444 has a weight from about 1.8 grams to about 2.4 grams, or about 2.2 grams, or any weight therebetween. The weight may or may not include the weight of the coating.

As previously mentioned, a pre-extruder may provide the benefit of increasing uniformity of a confectionery material before the confectionery material is introduced into a coextruder. In one example, the confectionery material is used to produce a chewing gum composition. In another example, the chewing gum composition is a center-filled chewing gum composition.

In addition to increasing uniformity of a confectionery material, as discussed above, a device within the pre-extruder may also be used to move the confectionery materials into contact with an extrusion screw contained in the pre-extruder. Certain confectionery materials, such as chewing gum compositions, for example, can be extremely viscous solids that solidify quickly and become extremely difficult to move by machines or devices that do not have a structure with sufficient strength and ability to move the large amount of material before solidification. Moreover, these issues become exaggerated when large amounts of a material are added as large, irregular, masses, for example, to an extruder and the irregular shape of the material on top of the extrusion screws makes it difficult for the extrusion screws to grasp the material and force it downstream through the extruder. In these situations, it is beneficial to use a sufficiently strong and rigid structure to move the large mass of material into contact with the extrusion screws to progress the material through the extruder.

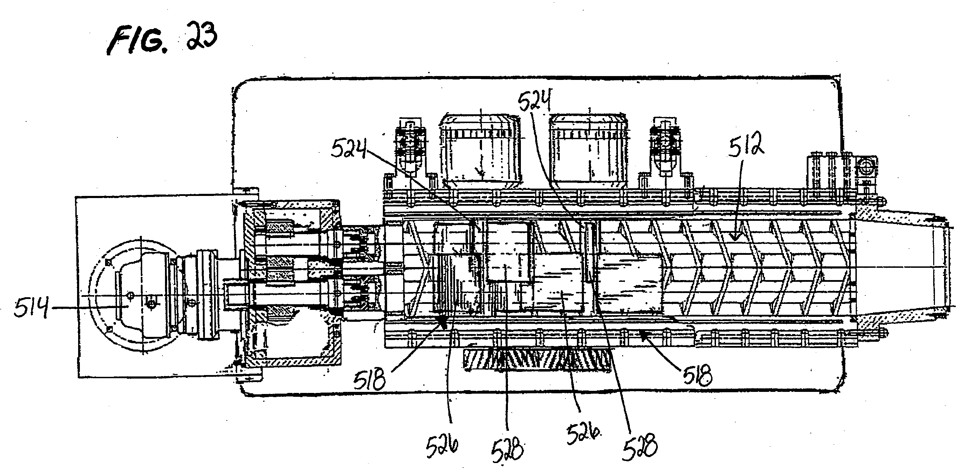

In one example, the apparatus 10 includes an extruder 500 as shown in Figures 23-33. The extruder 500 operates as a pre-extruder to extrude a chewing gum extrudate before the extrudate is coextruded with, for example, a center-fill material. Referring now to Figure 23, the extruder 500 for pre-extruding a material 502 is shown. The extruder 500 generally includes a support structure 504, a housing 506 that includes an inlet 508, a barrel 510 and an extrusion screw 512, and a drive source 514, each of which will be discussed in detail. It should be understood that the extruder 500 is not limited to the examples described herein.

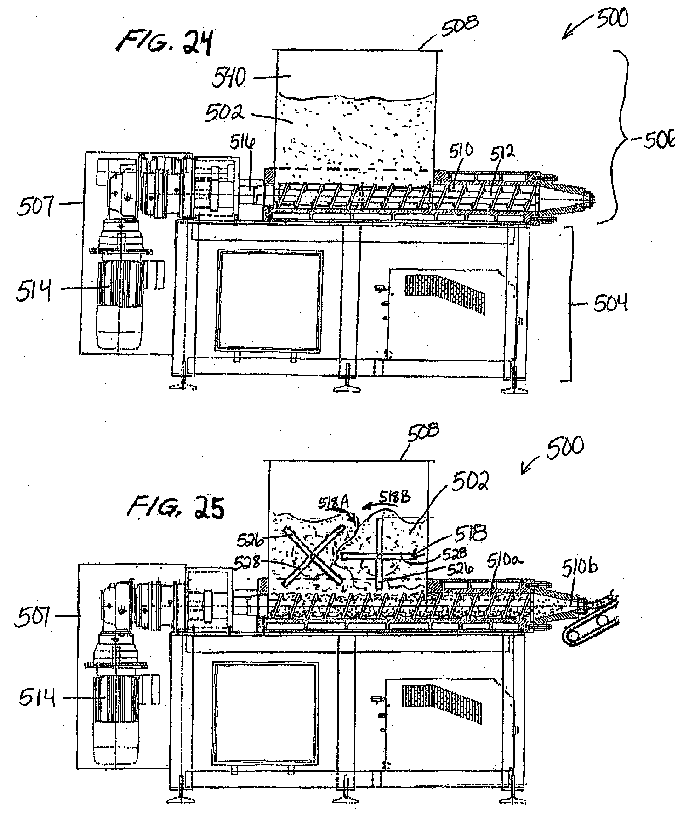

The support structure 504 of the extruder 500 may include a platform that provides support for other parts of the extruder 500 including, for example, the housing 506, as shown in Figure 23. The support structure 504 may be any suitable support structure commonly known in the art and may include, for example, an appropriate box, frame, table or stand. The support structure 504 may also be made of any suitable material known in the art such as, for example, sheet metal or aluminum. Moreover, the support structure 504 may function as a protective enclosure or housing for a power source (not shown) or a drive source 514. If the support structure 504 houses the drive source 514, it is desirable to provide an opening or a point of access in the support structure 504 to access the drive source 514. The drive source 514 may include a motor and a drive shaft 516, for example, or other drive source commonly known in the art. However, the support structure 504 need not function as a protective enclosure or housing for a drive source 514. Instead, the drive source 514 can be mounted to the top or side of the support structure 504, to the housing 506, or in a separate protective enclosure connected to the support structure 504 or housing 506. For example, and as is shown in Figures 23 and 24, the drive source 514 is housed in a casing 507 that is mounted to the support structure 504.

The housing 506 may be connected to and/or supported by the support structure 504. For example, the housing 506 may be connected to the support structure 504 using any suitable fastener known in the art including, for example, rivets, screws, nails, nuts and bolts. In one example, and as is shown in Figure 24, the housing 506 includes an inlet 508, at least one extrusion screw 512 and at least one rotatable cross-blade 518 as will be described below. Moreover, the housing 506 also includes a barrel 510 substantially encasing the extrusion screw 512. The barrel 510 is capable of receiving a material 502 and may include a tubular channel 510a and an outlet 510b.

The tubular channel 510a of the barrel 510 may have a substantially cylindrical cross-section and may define a horizontal axis. The barrel 510 may be made from any suitable material known in the art including, but not limited to, cast metal. To allow for rotation of the extrusion screw 512 located within the barrel 510, a back end of both the housing 506 and the barrel 510 has openings (not shown) to receive a drive shaft 516 or any other drive source 514 previously discussed herein above.

The housing 506 also contains an extrusion screw 512. The extrusion screw 512 is connected to a drive source 514 to rotate the extrusion screw 512 to move the material 502 downstream through the barrel 510. As described above, any suitable drive source 514 may be employed to rotate the extrusion screw 512 and the drive source 514 may be operatively connected to the extrusion screw 512 using any suitable connecting source known in the art. As shown in Figure 24, a drive shaft 516 is connected to the drive source 514 and extends from the drive source 514 though openings (not shown) in both the housing 506 and the barrel 510, respectively, to connect to the extrusion screw 512. The secured connection of the extrusion screw 512 to the drive shaft 516 allows the drive shaft 516 to rotate the extrusion screw 512 simultaneously with the rotation of the drive shaft 516.

As shown in Figure 24, the extrusion screw 512 includes an elongated, cylindrical body 512a and a flight pattern 512b helically extending around the extrusion screw 512. The extrusion screw 512 may have any combination of shapes, designs or characteristics including, but not limited to, flight angles, depths, land widths and pitches. Additionally, for example, while the present Figures illustrate the use of twin extrusion screws 512, the extruder 500 may include a single extrusion screw 512, two, three, four, or more extrusion screws.

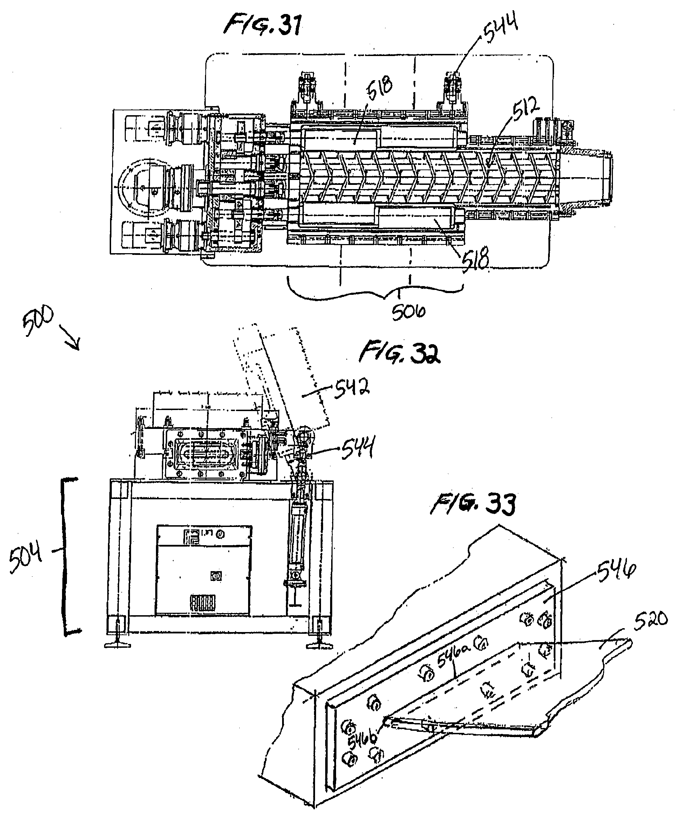

As previously discussed, and as shown by Figure 24, the extruder 500 includes a housing 506 having an inlet 508, an extrusion screw 512, and a rotatable cross-blade 518 housed within an interior of the housing 506. The cross-blade 518 is in cooperative communication with the inlet 508 and the extrusion screw 512 and is used to ensure that a mass of material 502 received within the inlet 508 of the housing 506, as shown by Figure 33, contacts the extrusion screw 512 to move the material 502 downstream through the barrel 510, as will be discussed herein below.

As used herein, a "cross-blade" is a rotatable device having an axle 524 and at least two fin portions extending from the axle 524. The cross-blade may include two fin portions extending from the axle 524 and covering substantially the length of the axle 524. Moreover, when looking from a cross-sectional view of the cross-blade, the fin portions may intersect with each other and form any angle Θ between the two fin portions. It will be appreciated, however, that the cross-blade may include more than two fin portions that intersect and may include three, four, five or more fin portions.

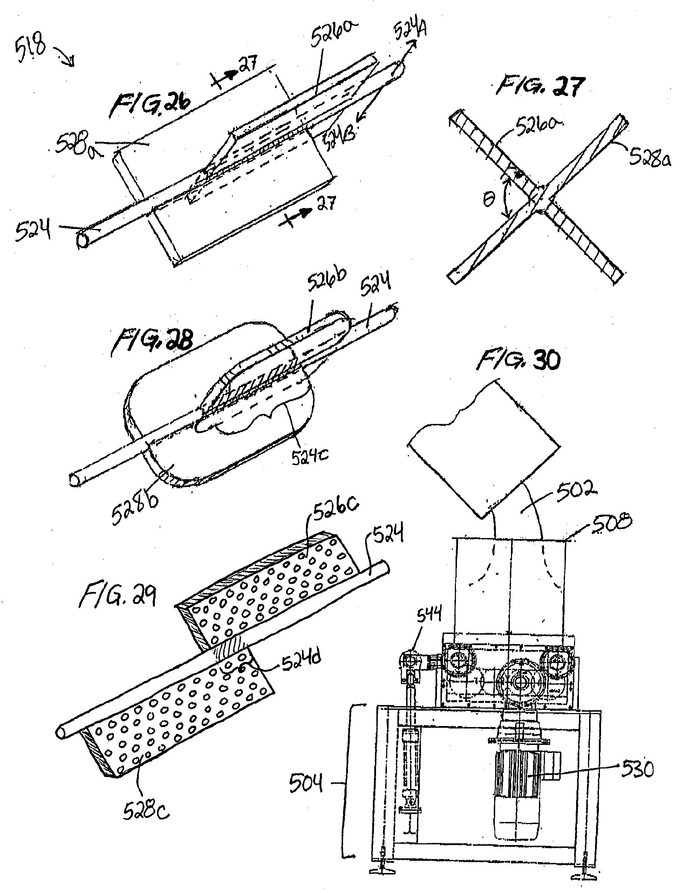

As shown in Figure 26, the cross-blade 518 has an axle 524 and fin portions 526, 528 that extend from the axle 524. The fin portions 526, 528 are structural projections that are coupled to, or formed continuously with, the axle 524 of the cross-blade 518. In other words, the fin portions 526, 528 may be fixedly attached to the axle 524 by any method known in the art including, but not limited to, joining, welding, or brazing. Similarly, the fin portions 526, 528 may be formed continuously with the axle 524 by any shaping process known in the art including conventional metal processes such as, but not limited to, molding, forging, and casting.

For example, and in one example, first and second fin portions 526 and 528, respectively, extend from the axle 524, as is shown in Figure 26. Each fin portion 526, 528 may extend in only one direction from the axle 524 (not shown), or in two directions from the axle 524. In other words, when the fin portions 526, 528 extend from the axle 524 in two directions, the fin portions 526, 528 extend in opposite directions and in one plane at an angle Θ of about 180° from the portion of the fin 526, 528 extending in the opposite direction on the opposite side of the axle 524, as is shown in Figures 25-28. For example, and as shown in Figure 26, one side of a first fin portion 526 extends from the axle 524 in a substantially upward direction, as shown by arrow 524A in Figure 29. Similarly, the other side of the first fin portion 526 extends from the axle 524 in a substantially downward direction, as shown by arrow 524B, that is about 180° from the side of the first fin portion 526 that extends upward.

The first and second fin portions 526, 528 may extend from the axle 524 at any location along the axle 524 to form two planes that create an angle Θ between the two planes. For example, where fin portions 526, 528 extend in only one direction from the axle 524 (not shown), the first fin portion 526 may extend from the axle 524 to create an angle Θ with the second fin portion 528 that extends from the axle 524. Because the two fin portions 526, 528 extend in only one direction from the axle 524, the first fin portion 526 may rotate around the axle 524 about 360° before it coincides with the second fin portion 525. Therefore, in this example, the angle Θ is greater than about 0° and less than about 360°.

Similarly, as shown in Figure 27, where fin portions 526, 528 extend in two directions from the axle 524, the first fin portion 526 extends from the axle 524 to create an angle Θ with the second fin portion 528, which also extends from the axle 524. In this example, because the fin portions 526 and 528 extend from the axle 524 in two directions, the first fin portion 526 may only rotate around the axle 524 about 180° before it coincides with the second fin portion 528. Therefore, in this example, the angle Θ is greater than about 0° and less than about 180°. For example, the first fin portion 526 may create an angle from about 30° to about 150° with the second fin portion 528. In one example, the first fin portion 526 extends from the axle 524 to create an angle of about 90° with the second fin portion 528, as shown in Figure 27.

As shown by the shading along the axle 524 in Figure 28, in one example, the fin portions 526, 528 of the cross-blade 518 form an overlap area 524C along a portion of the axle 524. In other words, a length of the axle 524 in the longitudinal direction contacts both the first fin portion 526 and the second fin portion 528. The overlap area 524C along the axle 524 provides added reinforcement for the cross-blade 518 as the cross-blade 518 rotates to move a mass of material 502 that may be not only large, but extremely viscous and heavy. To provide proper reinforcement for the cross-blade 518, overlap area 524C may be from about 10% to about 90% of the length of the axle 524, or any value therebetween. In one example, the overlap area 524C is from about 40% to about 60% of the length of the axle 524. The overlap area 524C may also be from about 50% of the length of the axle 524, or as much as is desired to provide reinforcement for the cross-blade 518 to ensure that the cross-blade 518 will have a sufficiently rigid structure to be capable of moving large amounts of a material 502. In one example, the overlap area 524C is about two inches.

It will be appreciated that the fin portions 526, 528 may have any shape as desired including, but not limited to, rectangular, square, oval, triangular or any other geometric shape desired. For example, the fin portions 526a, 528a of Figure 26 are substantially rectangular in shape. The fin portions 526b, 528b of the cross-blade 518 illustrated in Figure 28, however, have a substantially oblong shape. In other words, the fin portions 526b, 528b have an elongated shape and curved sides. The ends of the fin portions 526, 528 may also have any shape including, for example, blunt edges, as shown in Figure 26, or beveled edges. In one example, the fin portions 526, 528 have blunt edges that provide sharp edges, as shown in Figure 29. These sharp edges allow for better scraping during rotation of the cross-blades. As is also demonstrated in Figure 29, the cross-blade may include fin portions 526c, 528c that extend from the axle 524 at about 180° from each other such that the cross-blade has a paddle-like shape. Moreover, the cross-blade as shown in Figure 29 includes fin portions 526c, 528c that, taken together, cover substantially the length of the axle 524 with about a two inch overlap of the two fin portions 526c, 528c along the axle 524, as is designated by the numeral 524d.

Further, the fin portions 526, 528 of the cross-blades 518 may have any number of additional characteristics. For example, the fin portions 526b, 528b of the cross-blades 518 may be substantially solid as shown in Figure 28. The fin portions 526, 528 may also be, for example, substantially hollow or have any number of holes so as to be perforated, as is shown in Figure 29.

In one example, and as is shown in Figure 24, the cross-blades may be located between the inlet 508 of the housing 506 and the extrusion screw 512. In this example, the axle 524 of the cross-blade 518 is oriented in a direction that is substantially transverse to a length of the extrusion screw 512. The cross-blades 518 rotate in opposite directions, as is shown by arrows 518 A and 518B in Figure 24, to push the material 502 between the cross-blades 518 and downward into contact with the extrusion screw 512. While Figure 24 shows the cross-blades 518 rotating in opposite directions, the cross-blades 518 may also rotate in the same direction. Similarly, while Figure 24 shows the cross-blades 518 having fin portions 526, 528 constructed in an intermeshing relationship such that the fin portions 526, 528 overlap slightly in a vertical direction during rotation, the cross-blades 518 may also rotate with a gap between the fin portions 526, 528 and free from any overlap in a vertical direction. The use of the cross-blades 518 in moving the material 502 allows the material 502 to remain in constant motion to avoid solidification of the material 502 and to keep the material 502 in a flowable state.

In one example, the cross-blades 518 may distribute large amounts of the material 502 in a piecemeal fashion from the inlet 508 into contact with the extrusion screw 512. This is advantageous since piecemeal movement of the material 502 avoids large deposits of the material 502 onto the extrusion screw 512. Large deposits may clog and prevent rotation of the extrusion screws 512. In other words, distributing a large mass of material 502 in a piecemeal fashion prevents a large mass of material 502 from sitting on top of the extrusion screw 512 and inhibiting the ability of the flight pattern 512b of the extrusion screw 512 from integrating with the material 502 to progress the material 502 downstream toward an extrusion nozzle 546.

Figure 31 illustrates, however, a plan view of another example where the cross-blades 518 are located alongside the extrusion screw 512 in the housing 506. In this example, the axle 524 of the cross-blade 518 is oriented in a direction that is substantially parallel to a length of the extrusion screw 512. Further, an axis of the cross-blade 518 may also be in the same horizontal plane as an axis of the extrusion screw 512. Moreover, the cross-blade 518 is located a predetermined distance away from the extrusion screw 512 so that the cross-blade 518 and the extrusion screw 512 do not contact each other when rotating. In other words, a gap is present between the fin portions 526, 528 and the extrusion screw 512. The gap may have a length from about one-half millimeter to about two millimetres. In one example, the length of the gap is about one millimeter.

As further illustrated by Figure 31, in one example there is provided a housing 506 having two extrusion screws 512 and two cross-blades 518. The extrusion screws 512 and the cross-blades 518 may rotate in one of a corotating and counterrotating relationship. In other words, the cross-blades 518 may rotate in the same direction or in opposite directions. Likewise, the cross-blades 518 may rotate at similar or different speeds. For example, the cross-blades 518 may rotate at speeds from about 2 revolutions per minute (rpm) to about 5 rpm. In one example, the cross-blades 518 rotate at about 3 rpm. Further, the flight patterns 512b of the extrusion screws 512 may be similarly disposed in one of an intermeshing or nonintermeshing relationship. That is, the flight patterns 512b of the extrusion screw 512 may either intertwine with each other or may align during rotation.

As is indicated by the direction of arrows 518 A and 518B in Figure 24, in one example, first and second cross-blades 518 are provided and rotate in opposite directions. When the cross-blades 518 rotate in opposite directions, the material 502 is moved into an area between the cross-blades 518 to force the material 502 into contact with an extrusion screw 512.

Moreover, in one example where first and second extrusion screws 512 are provided in addition to first and second cross-blades 518, the cross-blades 518 are used to move a material 502 into an area between the first and the second extrusion screws 512. The extrusion screws 512 and cross-blades 518 may be so constructed and arranged to rotate in either of corotating and counterrotating relationship.

The cross-blade 518 may further be programmed to rotate either continuously or in an intermittent manner. In other words, the axle 524 of the cross-blade 518 may be operatively connected to a drive source 530 similar to the drive source 514 of the extrusion screw 512. The drive source 530 of the cross-blade 518, however, may also be operatively connected to an electronic control system (not shown) that communicates with the drive source 530 to rotate the cross-blade 518 continuously or intermittently as desired.

As previously mentioned, the above-described structure of the cross-blade 518 and its fin portions 526, 528 provide the cross-blade 518 with the ability to move large batches of a material through the extruder 500. This results in a confectionery product having consistent temperature dispersion and composition throughout. The cross-blades 518 advantageously move heavy, highly viscous material through the extruder 500 in an efficient and timely manner.

For example, the shape of the fin portions 526, 528 and the large amount of the axle 524 covered by the fin portions 526, 528 in a longitudinal direction reinforce the strength of the cross-blade 518 and allow the cross-blade 518 to move a greater amount of material 502. Further, the overlap of the fin portions 526, 528 along a portion of the axle 524 in the longitudinal direction, as is shown by the shading of Figure 28, also provides for reinforced strength of the cross-blade 518.

The movement of the cross-blades 518 blades not only ensures sufficient mixing of the material 502 but also allows a greater amount of material 502 to be introduced into the inlet 508 at the beginning of the pre-extrusion process, as previously mentioned. For example, the cross-blades 518 are so constructed and arranged as to move a material 502 introduced into the inlet 508 into contact with the extrusion screw 512 and the cross-blades 518.

As shown by Figure 32, in one example, the extruder 500 includes a lid 542 for easy accessibility of the extrusion screw 512 or cross-blade 518. The lid includes a lift mechanism 544 that may be used to lift the lid 542 to expose the extrusion screw 512. The lift mechanism 544 may include any device or mechanism known in the art for lifting objects. Specifically, in one example, the lift mechanism 544 includes a pair of hydraulic cylinders, as is shown in Figures 30-32.

Figure 33 illustrates an extrusion outlet 546 connected to the end of the barrel 510 and used for shaping the extrudate 520. The extrusion outlet 546 is connected to the barrel 510 using any suitable connection mechanism including, but not limited to, fasteners, rivets, screws, nails, nuts and bolts. In one example, the extrusion outlet 546 has a substantially oblong shape defined by two elongated, horizontal and parallel lines 546a joined by curved sides 546b, as is illustrated in Figure 36. While the current Figures disclose an extrusion outlet 546 having an oblong shape, there are a number of alternative shapes that may be used with the extrusion outlet 546. For example, the extrusion outlet 546 may have a substantially circular, elliptical, oval, rectangular, square or tapered shape. Consequently, the extrudate 520 forced through the extrusion outlet 546 may have any shape or geometric form known in the art, or as desired including such nonlimiting examples as a rope, a sheet, a slab, or a strand with any desired thickness. For example, after the extrudate 520 is forced through the extrusion outlet 546, the extrudate 520 may have a substantially oblong shape, a width from about 200 millimeters to about 300 millimeters, and a thickness from about 5 millimeters to about 15 millimeters, as is shown in Figure 36. In one example, the extrudate 520 has a width from about 250 millimeters and a thickness of about 10 millimeters. In another example, the extrudate 520 has a flow rate from about 72 meters/minute to about 88 meters/minute when exiting the extrusion outlet 546. In one example, the extrudate 520 has a flow rate of about 80 meters/minute, hi the same manner, about 400 to about 600 kilograms of material 502 is moved through the extruder 500 in about 80 minutes to about 100 minutes.

From the extrusion outlet 546, a conveyor belt 22 may receive the extrudate 520 from the extruder 500 and may deliver the extrudate 520 to one or more relaxation belts 24 that may transport the extrudate 520 to a coextrusion device 14. Transport of the extrudate 520 along the relaxation belt 24 permits the extrudate 520 to cool and equilibrate after the extrusion process, as discussed herein above.

In another example, the extruder 500 may be a mixing extruder. As used herein, "mixing extruder" is an extruder that continuously receives chewing gum starting materials (e.g., ingredients), at previously determined feed rates, to continuously mix and discharge chewing gum therefrom. Similar to extruder 500, a mixing extruder may be used to mix a chewing gum material before the chewing gum material enters the coextruder 14. In contrast to a batch mixer, the mixing extruder operates continuously to thoroughly mix chewing gum base ingredients so that all of the ingredients are blended together and extruded as a substantially homogeneous chewing gum mass. The chewing gum ingredients may include, for example, gum base, bulking agents, flavor, softeners, and combinations thereof.

After extruding in a mixing extruder, the substantially homogenous chewing gum mass may then be introduced, along with a center-fill composition, into a coextruder to coextrude a rope of center-filled chewing gum, as described herein above. Similarly, the substantially homogenous chewing gum mass may also be extruded onto a relaxation belt to allow the mass to equilibrate before introduction into the coextruder 14. It should be understood that the mixing extruder may be incorporated into apparatus 10 as a replacement for, or in addition to, the extruder 500.

It should be understood that various changes and modifications to the presently preferred embodiments described herein will be apparent to those skilled in the art. Such changes and modifications can be made without departing from the scope of the present subject matter and without diminishing its intended advantages. It is therefore intended that such changes and modifications be covered by the appended claims.

## Claims

1. An apparatus (18) for forming a confectionery product comprising:
a first wheel (34) having a plurality of first forming members (36); and
a second wheel (38) having a plurality of second forming members (40),
the first and second wheels (34, 38) being constructed and arranged so that at least one of the plurality of first forming members (36) can form with at least one of the plurality of second forming members (40) a cavity for receiving a centre-filled confectionery rope (28) and form the rope (28) into a beaded rope (44) comprising a plurality of sealed, centre-filled confectionery pieces (46) attached to each other.

2. The apparatus (18) of claim 1 further comprising an ejection device (66, 200, 210) capable of ejecting the formed confectionery product from the apparatus (18).

3. The apparatus (18) of claim 2 wherein the ejection device comprises a plunger member (66).

4. The apparatus (18) of claim 3 wherein the formed product is not contacted by a second plunger member.

5. The apparatus (18) of claim 2 wherein the ejection device comprises a non-contact ejection device (200, 210).

6. The apparatus (18) of claim 5 wherein the non-contact ejection device comprises a device (200, 210) for discharging a pressurized fluid.

7. A method for producing a confectionery product comprising:
feeding a rope (28) of a centre-filled confectionery between a first forming member (36) on an outer surface of a first wheel (34) and a second forming member (40) on an inner surface of a second wheel (38);
forming a beaded rope (44) of sealed, center-filled confectionery pieces (46) between cooperating first and second forming members (36, 40); and
ejecting the beaded rope (44).

8. The method of claim 7 wherein the ejection is accomplished by using a discharge of pressurized fluid.

9. The method of claim 7 or claim 8 wherein the ejection is accomplished by using a plunger member (66).

10. The method of any of claims 7 to 9 further comprising the step of separating the beaded rope (44) into individual center-filled confectionery pieces (46).

11. The method of claim 10 further comprising the step of coating the center-filled confectionery pieces (46).

## Patentansprüche

1. Vorrichtung (18) zur Bildung eines Süßwarenprodukts, die Folgendes aufweist:
ein erstes Rad (34) mit einer Mehrzahl von ersten Bildungselementen (36); und
ein zweites Rad (38) mit einer Mehrzahl von zweiten Bildungselementen (40),
wobei das erste und das zweite Rad (34, 38) so gebildet und ausgestaltet sind, dass wenigstens ein Bildungselement der Mehrzahl von ersten Bildungselementen (36) mit wenigstens einem Bildungselement der Mehrzahl von zweiten Bildungselementen (40) einen Hohlraum zur Aufnahme eines in der Mitte gefüllten Süßwarenstrangs (28) bilden kann und den Strang (28) zu einem verwulsteten Strang (44) bilden kann, der eine Mehrzahl von abgeschlossenen, in der Mitte gefüllten Süßwarenteilen (46), die aneinander befestigt sind, aufweist.

2. Vorrichtung (18) nach Anspruch 1, die ferner eine Auswurfvorrichtung (66, 200, 210) aufweist, die dazu fähig ist, das gebildete Süßwarenprodukt aus der Vorrichtung (18) auszuwerfen.

3. Vorrichtung (18) nach Anspruch 2, wobei die Auswurfvorrichtung ein Kolbenelement (66) aufweist.

4. Vorrichtung (18) nach Anspruch 3, wobei das gebildete Produkt nicht mit einem zweiten Kolbenelement in Berührung kommt.

5. Vorrichtung (18) nach Anspruch 2, wobei die Auswurfvorrichtung eine berührungslose Auswurfvorrichtung (200, 210) aufweist.

6. Vorrichtung (18) nach Anspruch 5, wobei die berührungslose Auswurfvorrichtung eine Vorrichtung (200, 210) zur Abgabe eines unter Druck stehenden Fluids aufweist.

7. Verfahren zur Herstellung eines Süßwarenprodukts, das Folgendes aufweist:
Zuführen eines Strangs (28) einer in der Mitte gefüllten Süßware zwischen ein erstes Bildungselement (36) auf einer äußeren Fläche eines ersten Rads (34) und ein zweites Bildungselement (40) auf einer inneren Fläche eines zweiten Rads (38);
Bilden eines verwulsteten Strangs (44) aus abgeschlossenen, in der Mitte gefüllten Süßwarenteilen (46) zwischen zusammenwirkenden ersten und zweiten Bildungselementen (36, 40); und
Auswerfen des verwulsteten Strangs (44).

8. Verfahren nach Anspruch 7, wobei das Auswerfen durch die Verwendung einer Abgabe eines unter Druck stehenden Fluids erzielt wird.

9. Verfahren nach Anspruch 7 oder Anspruch 8, wobei das Auswerfen durch die Verwendung eines Kolbenelements (66) erzielt wird.

10. Verfahren nach einem der Ansprüche 7 bis 9, das ferner den Schritt des Trennens des verwulsteten Strangs (44) in einzelne in der Mitte gefüllte Süßwarenteile (46) aufweist.

11. Verfahren nach Anspruch 10, das ferner den Schritt des Überziehens der in der Mitte gefüllten Süßwarenteile (46) aufweist.

## Revendications

1. Appareil (18) pour façonner un produit de confiserie comprenant :
une première roue (34) comportant une pluralité de premiers éléments de façonnage (36) ; et
une seconde roue (38) comportant une pluralité de seconds éléments de façonnage (40),
les première et seconde roues (34, 38) étant construites et agencées de telle sorte qu'au moins l'un de la pluralité de premiers éléments de façonnage (36) peut former, avec au moins l'un de la pluralité de seconds éléments de façonnage (40), une cavité destinée à recevoir un cordon de confiserie fourré (28) et à façonner le cordon (28) en un cordon de perles (44) comprenant une pluralité de morceaux de confiserie fourrés et scellés (46) reliés les uns aux autres.

2. Appareil (18) selon la revendication 1, comprenant en outre un dispositif d'éjection (66,200,210) capable d'éjecter le produit de confiserie façonné à partir de l'appareil (18).

3. Appareil (18) selon la revendication 2, dans lequel le dispositif d'éjection comprend un élément de piston (66).

4. Appareil (18) selon la revendication 3, dans lequel le produit façonné ne vient pas en contact avec un second élément de piston.

5. Appareil (18) selon la revendication 2, dans lequel le dispositif d'éjection comprend un dispositif d'éjection sans contact (200 ,210).

6. Appareil (18) selon la revendication 5, dans lequel le dispositif d'éjection sans contact comprend un dispositif (200, 210) destiné à évacuer un fluide sous pression.

7. Procédé de fabrication d'un produit de confiserie comprenant :
l'alimentation d'un cordon (28) d'une confiserie fourrée entre un premier élément de façonnage (36) sur une surface extérieure d'une première roue (34) et un second élément de façonnage (40) sur une surface intérieure d'une seconde roue (38) ;
le façonnage d'un cordon de perles (44) constitué de morceaux de confiserie fourrés et scellés (46) entre les premier et second éléments de façonnage (36, 40) coopérant ; et
l'éjection du cordon de perles (44).

8. Procédé selon la revendication 7, dans lequel l'éjection est accomplie en utilisant une décharge de fluide sous pression.

9. Procédé selon la revendication 7 ou la revendication 8, dans lequel l'éjection est accomplie en utilisant un élément de piston (66).

10. Procédé selon l'une quelconque des revendications 7 à 9, comprenant en outre l'étape consistant à la séparation du cordon de perles (44) en morceaux de confiserie fourrés individuelles (46).

11. Procédé selon la revendication 10, comprenant en outre l'étape consistant à recouvrir les morceaux de confiserie fourrés (46).
